# EUROPÄISCHE PATENTSCHRIFT

(11) **EP 1 412 642 B1**
(45) Veröffentlichungstag und Bekanntmachung des Hinweises auf die Patenterteilung: **10.10.2007**
(21) Anmeldenummer: 02758130.5
(22) Anmeldetag: 02.08.2002
(51) Int. Cl.: F16B 2/06, F16B 7/18, E04H 17/00, A47B 47/00

(54) **SYSTEM, KLEMMELEMENT UND KONTERELEMENT ZUM VERBINDEN VON PROFILELEMENTEN**
SYSTEM, CLAMPING ELEMENT AND COUNTER-ELEMENT FOR THE CONNECTION OF PROFILED ELEMENTS
SYSTEME, ELEMENT DE SERRAGE ET CONTRE-ELEMENT POUR L'ASSEMBLAGE D'ELEMENTS PROFILES

(30) Priorität: 03.08.2001 DE 10138269; 09.07.2002 DE 10231018
(43) Veröffentlichungstag der Anmeldung: 28.04.2004
(73) Patentinhaber: Basler, Norbert, 38154 Königslutter (DE)
(72) Erfinder: Basler, Norbert, 38154 Königslutter (DE)
(74) Vertreter: Stornebel, Kai
(86) Internationale Anmeldenummer: PCT/DE2002/002835
(87) Internationale Veröffentlichungsnummer: WO 2003/014580

(56) Entgegenhaltungen:
- GB-A- 966 351
- US-A- 2 400 512
- US-A- 3 319 983
- US-A- 4 993 862

## Beschreibung

Die Erfindung betrifft ein System, ein Klemmelement und ein Konterelement zum Verbinden von Profilelementen. Das System und das Klemm- oder Konterelement sind insbesondere zur universellen Bauteilbefestigung, insbesondere von Profilen und Platten an Profilelementen bzw. zum Verbinden von Profilelementen miteinander, an feststehenden Objekten oder mit Anbauteilen geeignet.

Um Regale, Wandverkleidungen, Ablagen, Messestände oder dergleichen zu errichten, die vielfältig verstellbar, hoch belastbar und beliebig auf- und abbaubar sind, wurde bisher in der Regel auf Profile zurückgegriffen, die periodisch sich wiederholende Ausnehmungen wie Löcher oder Kerben aufweisen. Je kleiner die Abstände zwischen diesen Ausnehmungen sind, desto feiner können die an den Profilen angebrachten Elemente verstellt werden. Regale kleiner bis mittlerer Größe weisen in der Regel vier als Ständer eingesetzte Profile auf, in die Böden eingeschraubt werden. Alternativ dazu sind Regale bekannt, deren Seitenwände einteilig ausgebildet sind.

Nachteilig an allen bekannten Konstruktionen ist die Notwendigkeit der Einarbeitung der Ausnehmungen in die Profile bzw. Ständer, wobei übliche Herstellungsverfahren wie Stanzen, Bohren oder Fräsen eingesetzt werden. Bei einer geforderten hohen Variabilität ist ein kleines Raster Voraussetzung, was bei stärkeren Profilen nur mit erhöhtem Aufwand herzustellen ist. Allgemein sind solche Tragkonstruktionen mit periodisch sich wiederholenden Ausnehmungen nicht beliebig fein einstellbar.

Die GB 966,351 A1 beschreibt ein Verbindungssystem für eckige Hohlprofile mit zwei Klammerelementen, die über eine Schraube gegeneinander verspannt werden. Die Klammerelemente liegen plan und dicht an den Hohlprofilen an, um diese miteinander zu verbinden, um ein System bereitzustellen, mit dem Antennen besser und stabiler aufgebaut werden können. In dem montierten Zustand liegen die Querprofile und die Klammerelemente unmittelbar aneinander an, um möglichst wenig Spiel zueinander zu ermöglichen.

Ausgehend von diesem Stand der Technik liegt der Erfindung die Aufgabe zugrunde, ein System, ein Klemmelement und ein Konterelement zum Verbinden von Profilelementen bereitzustellen, mit dem ein Maximum an Verstellbarkeit, spezifischer Belastbarkeit und geringem Aufwand bei der Herstellung und Montage möglichst handelsüblicher Profile möglich ist.

Erfindungsgemäß wird diese Aufgabe durch ein System mit den Merkmalen des Anspruchs 1, ein Klemmelement mit den Merkmalen des Anspruchs 16 und ein Konterelement mit den Merkmalen des Anspruchs 24 gelöst. Vorteilhafte Ausgestaltungen und Weiterbildungen der Erfindung sind in den Unteransprüchen aufgeführt.

Das System zum Verbinden von Profilelementen weist ein Klemmelement auf, das aus einer Klemmplatte und zumindest einem im wesentlichen rechtwinklig dazu ausgerichteten Vorsprung besteht, der als Anschlag oder Anlage für Profilelemente dient. Dieses Klemmelement verbindet sowohl Anbauteile an Profilelemente als auch die Profilelemente untereinander. So wird ermöglicht, dass separate Stangen von dem Klemmelement derart aufgenommen werden, dass sie hinsichtlich ihrer Position zueinander festgelegt sind. Weiterhin ist ein Konterelement mit einer Basisplatte und zumindest einem Vorsprung senkrecht zu der Basisplatte als Anschlag für die Profilelemente vorgesehen, wobei im montierten Zustand das Konterelement an der dem Klemmelement gegenüberliegenden Seite der Profilelemente dergestalt anliegt, dass die Vorsprünge des Konterelementes und des Klemmelementes einander zugewandt sind.

Die Vorsprünge umgreifen im montierten Zustand das jeweilige Profilelement bzw. die Profilelemente oder liegen an ihnen an. An der Klemmplatte und an dem Konterelement sind Einrichtungen zum gegenseitigen Verspannen in Richtung aufeinander zu ausgebildet, wobei eine permanente Anpresskraft des Konterelementes und der Klemmplatte an den Profilelementen ausgeübt wird, so dass im montierten Zustand die Profilelemente zwischen dem Klemmelement und dem Konterelement eingeklemmt sind und zumindest eine Seite des jeweiligen Profilelementes an einer senkrecht zu dem Klemmelement und dem Konterelement stehenden Wandung der Vorsprünge anliegt. Die Einrichtungen zum gegenseitigen Verspannen sind im wesentlichen mittig zwischen den Profilelementen hindurchgeführt, so dass eine zentrische Krafteinleitung erfolgt; durch das Hindurchführen zwischen zwei Profilelementen bleiben diese unverletzt, so dass eine zusätzliche Bearbeitung der Profilelemente wie z.B. Durchbohren, entfällt. Bei einer losen Befestigung oder Zuordnung des Klemmelementes und des Konterelementes ist ein Längenausgleich und eine Verschieblichkeit der Elemente zueinander gegeben.

Um Anbauteile leicht an dem Profilelement anordnen und sicher spannen zu können, ist ein Freiraum zur Aufnahme dieser Anbauteile zwischen der Klemmplatte und dem Profilelement ausgebildet, wobei dieser Freiraum entweder so dimensioniert ist, dass im montierten Zustand das Anbauteil eingehängt bzw. eingesteckt werden kann oder aber dass der Freiraum dergestalt dimensioniert ist, dass eine Klemmwirkung zwischen dem Anbauteil und dem Profilelement auftritt. So kann beispielsweise ein Winkelprofil entweder nur eingesteckt werden, um eine Platte aufzulegen oder aber eine entsprechende Abkantung wird zunächst zwischen Klemmplatte und Profilelement eingeführt und durch Aufbringen der Zugkräfte über die vorab geschilderten Einrichtungen wird dieses Bauelement mit dem Profilelement bzw. den Profilelementen verklemmt. Die Einrichtungen zum Verspannen sind dabei zweckmäßigerweise verschieblich, beispielsweise in einem Langloch, jenseits eines den Freiraum bildenden Absatzes angeordnet, um durch unterschiedliche Hebel eine angepaßte Krafteinleitung bewirken zu können. Die Vorsprünge sind dabei auf dem Absatz angeordnet oder mit diesem zusammen angeformt.

Um ein Verkippen insbesondere mehrteiliger Profilelemente zu vermeiden, ist vorgesehen, die Einrichtungen zur Ausübung der notwendigen Zugspannung bzw. zum gegenseitigen Verspannen im wesentlichen auf der Mittelachse der Vorsprünge oder bei zwei oder mehr Vorsprüngen zwischen den Vorsprüngen oder spiegelsymmetrisch zu der Mittelachse der Klemmplatte anzuordnen. Die Vorsprünge können durch Ausnehmungen in einem an der Klemmplatte oder der Basisplatte des Klemm- oder Konterelementes befestigten Basisteil ausgebildet sein, beispielsweise durch Ausfräsung den Profilelementen entsprechender Nuten oder dergleichen.

Vorteilhafterweise ist das Klemmelement einstückig ausgebildet und kann auf einfache Art und Weise durch Schmieden, Gesenkschmieden oder durch ein Urformverfahren hergestellt werden. Ein solches Urformverfahren, beispielsweise Feinguss, ermöglicht auch das Gießen komplizierter, geometrischer Strukturen sowie der Vorbereitung von Gewinden, so dass nur ein geringer Aufwand bei der Nachbearbeitung aufgebracht werden muß. Eine Herstellung kann zudem über eine spanende Bearbeitung mittels Bohrer und Fräser oder in einem anderen Trennverfahren, z.B. über Laser oder dergleichen, erfolgen.

Alternativ dazu sind die Klemmplatte und die Vorsprünge oder das Basisteil als separate Teile ausgebildet, wobei der Vorteil hier in der einfachen Herstellung liegt. Vorsprung und Klemmplatte können als einfaches Stanzteil hergestellt und anschließend miteinander verbunden bzw. aneinander befestigt werden. Dieses Verbinden kann nachträglich über einfaches Verschrauben oder über Verschweißen, Einlegen, Einstecken oder Verkleben erfolgen, je nach dem, wie der Einsatzzweck des Klemmelementes definiert ist.

Um eine möglichst preiswerte und haltbare Verbindung zwischen Klemmelement und Konterelement zu realisieren, sind die Einrichtungen zum Verspannen als Zuganker, Gewinde, Klemmen, Keildurchführungen, Haken, Mutteraufnahmen, Ausnehmungen, Exzenterspanner oder Hinterschneidungen ausgebildet. Auf diese Art und Weise kann durch Verschrauben oder Einfügen von Stehbolzen, Knebeln, Keilen oder ähnlichem eine haltbare und lösbare Verbindung hergestellt werden, ohne auf teure Sonderanfertigungen zurückgreifen zu müssen. Die Einleitungsstelle für die benötigte Zugspannung kann neben einer Bohrung oder einem Gewinde auch als ein Langloch bzw. als ein Stehbolzen oder eine Stehplatte ausgebildet sein. Die Zuganker oder Stehbolzen können an der Klemmplatte oder dem Konterelement angeformt oder mit diesem einstückig ausgebildet sein.

Die Einsatzgebiete des Systems werden erweitert, wenn an der Klemmplatte profilseitig oder von dem Profil abgewandt Kabeldurchführungen, Beschichtungen, Profilausnehmungen oder Schonelemente angeordnet sind. Dadurch können Kabel unauffällig und sicher verlegt werden, die Profile werden durch die Beschichtungen oder Schonelemente geschont bzw. wird durch die Beschichtung eine Isolierung bewirkt oder ein Halten der Klemmplatte an dem Anbauteil erleichtert. Entsprechende Profilausnehmungen ermöglichen ein Einhaken oder ein Einführen von Quer-, Diagonal- oder Längsverstrebungen oder weiterer Befestigungselemente an dem Klemmelement.

In einer Weiterbildung der Erfindung ist vorgesehen, dass an der Klemmplatte Aufnahmen, insbesondere Quernuten, für Bauteile zum Verspannen oder Versteifen, insbesondere quer zur Ausrichtung der Profilelemente, vorgesehen sind. Solche Aufnahmen können auch an den Vorsprüngen ausgebildet sein. Ebenfalls sind Bohrungen, Hülsen, Gewinde, Bolzen, Stifte, Ausfräsungen oder Hinterschneidungen an der Klemmplatte angeordnet, wobei die Anordnung von Bolzen oder Stiften den Vorteil hat, dass diese als Scharniere dienen können. Insbesondere bei Messebauten können so beliebige Formen mit Stellwänden und veränderliche Abtrennungen erzeugt werden.

Um auch bei glatten und harten Profilelementen eine sichere Befestigung des Klemmelementes zu erreichen, ist es vorgesehen, dass die Klemmplatte oder das Basisteil mit zumindest einer Schneide, vorzugsweise zwischen zwei Vorsprüngen, ausgestattet ist oder ausgestattet werden kann, die in das Profil einschneidet und eine formschlüssige Verbindung herstellt. Es wird somit eine Einkerbung während der Montage und des Aufbringens einer entsprechenden Zugkraft in das Profilelement eingearbeitet, die einen zusätzlichen Halt für das Klemmelement bzw. das mit dem Klemmelement befestigte Anbauteil gewährleistet.

Eine Erhöhung der Klemmwirkung und ein Ausgleich der Flächenpressung werden erzielt, wenn die Klemmplatte in Richtung Vorsprung geneigt oder gebogen ausgebildet ist, wobei eine besonders schonende und gleichmäßige Klemmung dann erreicht wird, wenn die Klemmplatte federnd in Richtung auf das Profilelement ausgebildet ist. Ein weiterer Vorteil besteht darin, dass durch die Biegung zu befestigendes Rundmaterial nach unten in Richtung Vorsprung gedrückt wird, so dass im wesentlichen unabhängig von dem Durchmesser des Rundmaterials eine sichere Befestigung gewährleistet ist, da die Möglichkeit eines Abgleitens nach oben verhindert ist. Durch die Biegung ist ein Gegenlager in der Klemmplatte integriert.

Um eine möglichst optimale Führung der Profilelemente zu gewährleisten, ist die Möglichkeit vorgesehen, dass die Vorsprünge oder die Vorsprünge und die Verspanneinrichtungen oder die Ausnehmungen in dem Basisteil das oder die Profilelemente an drei Seiten umfasst bzw, umfassen. Insbesondere bei plattenförmigen Profilelementen wird durch diese Ausgestaltung ein Verkippen der Profilelemente zueinander und in Bezug auf das Profilelement verhindert, wodurch die Stabilität des Systems zusätzlich erhöht wird.

Zur weiteren Erhöhung der Sicherheit, insbesondere bei Systemen, die in Wand- oder Deckennähe aufgestellt werden, ist es vorgesehen, dass das Konterelement Bohrungen bzw. Ausnehmungen zur Befestigung an einer Wandung aufweist. Das Konterelement kann so an der Wand oder Decke bzw. an dem Boden verschraubt oder eingehakt werden, wodurch sich eine erhöhte Sicherheit und Stabilität des gesamten Systems erreichen lässt.

Eine Weiterbildung sieht vor, dass an dem Konterelement Vorsprünge zur Umfassung des jeweiligen Profilelementes, Riffelungen oder Retentionseinrichtungen ausgebildet sind, die in Zusammenarbeit mit der oder den Ausnehmungen in dem Klemmelement eine Festlegung der Profilelemente bzw. des jeweiligen Profilelementes sicherstellen. Die Riffelungen oder Retentionseinrichtungen sind entsprechend dem Profilelement ausgebildet und können ein Negativ beispielsweise einer Strukturierung des Profilelementes darstellen. Weiterhin können Aufnahmen, insbesondere Quernuten, für Bauteile zum Verspannen oder Versteifen, insbesondere quer zur Ausrichtung der Profilelemente, vorgesehen sein. Ebenfalls sind Bohrungen, Hülsen, Gewinde, Bolzen, Stifte, Ausfräsungen oder Hinterschneidungen an dem Konterelement angeordnet, wobei die Anordnung von Bolzen oder Stiften den Vorteil hat, dass diese als Scharniere dienen können. Auf diese Weise können Verstrebungen und Bauteile wahlweise auch an der Rückseite oder beidseitig angeordnet werden.

Eine Weiterbildung der Erfindung sieht vor, dass an dem Konterelement rückseitig oder in einem Winkel zu der Basisplatte ein Klemmelement wie oben beschrieben ausgebildet ist. Dadurch kann erreicht werden, dass eine beliebige Anzahl von Profilelementen hintereinander oder nebeneinander angeordnet werden können, so dass relativ lange Bauten, Regale, Ständer etc. montiert und errichtet werden können. Durch die Verbindung von Konterelement und Klemmelement zu einem Bauteil, sei es durch einstückige Ausbildung oder durch Verschrauben, Verschweißen, Verkleben oder dergleichen, entsteht ein Verbindungsteil oder Kopplungsteil, ein sogenannter "Montageknoten", mit dem eine Vielzahl an Gestaltungsmöglichkeiten eröffnet wird. So können aus geraden Bauelementen unter Einsatz verschiedener Kopplungsteile Polygone mit unterschiedlichen Winkeln verwirklicht werden, je nachdem, wie die Kopplungsteile ausgebildet sind. Wenn die "Rückseiten" eines Konterelementes und eines Klemmelementes einander zugekehrt sind, wird eine Verlängerung in einer Flucht bewirkt, während bei Einsatz von winkeligen Zuordnungen eine von der Linie abweichende Gestaltung erreicht wird.

Das Klemmelement oder das Konterelement ist zur Aufnahme der Profilelemente, die als separate Rohre, Stäbe, Leisten oder plattenförmige Bauelemente oder aber auch als U-, I-, H-, L- oder M-Profile ausgebildet sein können, ausgebildet. Die separate Ausbildung der Profilelemente hat eine erhöhte Flexibilität und Variabilität zur Folge, wohingegen die Ausbildung in verschiedenen vorgeformten Profilen die Stabilität erhöht.

Das Klemmelement ist zum Verbinden von Profilelementen miteinander, an feststehenden Objekten oder mit Anbauteilen ausgebildet. Es besteht aus einer Klemmplatte und zumindest einem Vorsprung senkrecht zu der Klemmplatte als Anschlag für die Profilelemente, wobei der Vorsprung dergestalt ausgebildet ist, dass zumindest eine Seite des jeweiligen Profilelementes an einer senkrecht zu der Klemmplatte stehenden Wandung des Vorsprunges anlegbar ist und der Vorsprung eine Verlagerung der Profilelemente in Richtung senkrecht zu dessen Längserstreckung und parallel zu der Klemmplatte formschlüssig verhindert An dem Klemmelement sind Einrichtungen zum Verspannen mit den Profilelementen vorgesehen, wobei die Einrichtungen im Wesentlichen mittig oder spiegelsymmetrisch zu einer Mittelachse der Klemmplatte angeordnet sind. Im montierten Zustand bilden die Vorsprünge einen Freiraum zwischen den Profilelementen und der Klemmplatte.

Der Vorteil an diesem Klemmelement besteht darin, dass insbesondere bei an der Wand montierten oder an einem festen Objekt befestigten Profilelementen entsprechende Anbauteile einfach, schnell und variabel angebaut werden können.

An den Vorsprüngen sind Aufnahmen für Verspannungs- oder Versteifungselemente, insbesondere quer zur Ausrichtung der Profilelemente, Bohrungen, Gewinde, Bolzen, Stifte, Ausfräsungen, Befestigungseinrichtungen oder Hinterschneidungen angeordnet, um eine maximale Variabilität zu erzielen. Weiter kann das Klemmelement mehrteilig ausgebildet sein, wobei die Bauteile gegeneinander verschiebbar oder verdrehbar ausgebildet sind, um Drehung der Profilelemente zu ermöglichen oder eine winkelige Montage zu erleichtern.

Auch die Vorsprünge selbst können mehrteilig, insbesondere mehrschichtig ausgebildet sein, wobei die Schichten axial hintereinander in Verspannungsrichtung angeordnet sind.

Auf dem Klemmelement sind die Vorsprünge und die Einrichtungen zum Verspannen vorzugsweise dergestalt angeordnet, dass die Profilelemente zwischen zwei Vorsprüngen, zwischen einem Vorsprung und einer Einrichtung oder zwischen zwei Einrichtungen anordbar sind.

Ein Konterelement ist vorzugsweise korrespondierend zu dem Klemmelement ausgebildet, so dass die Ausführungen zu dem Klemmelement entsprechend gelten.

Nachfolgend wird die Erfindung anhand von Ausführungsbeispielen näher erläutert. Gleiche Bezugszeichen in verschiedenen Figuren bezeichnen gleiche Bauelemente. Aus Gründen der Übersichtlichkeit sind nicht in allen Figuren alle Bezugszeichen aufgeführt. Es zeigen:

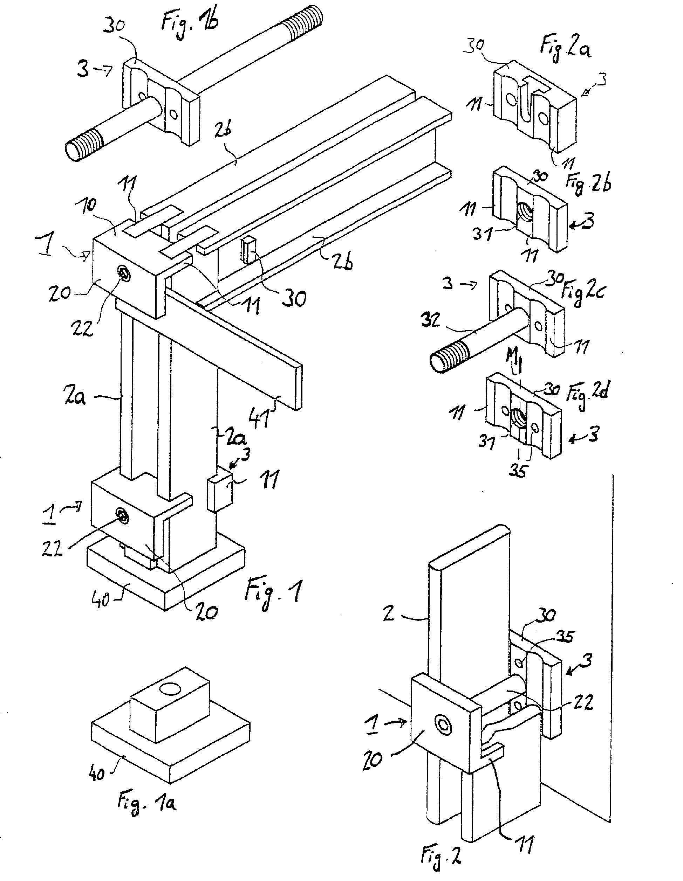

- Figur 1 -: einen Ausschnitt eines montierten Systems;
- Figur 1a -: eine Detailansicht eines Stützfußes;
- Figur 1 b -: ein Konterelement;
- Figur 2 -: ein an einer Wandung montiertes System;

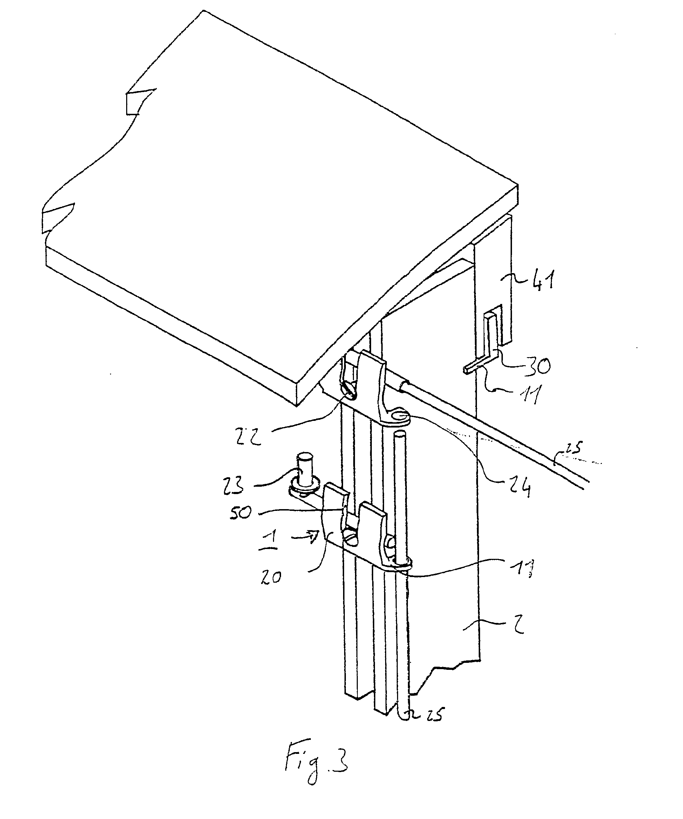

- Figuren 2 a, b, c, d -: Konterelemente in Einzeldarstellung;

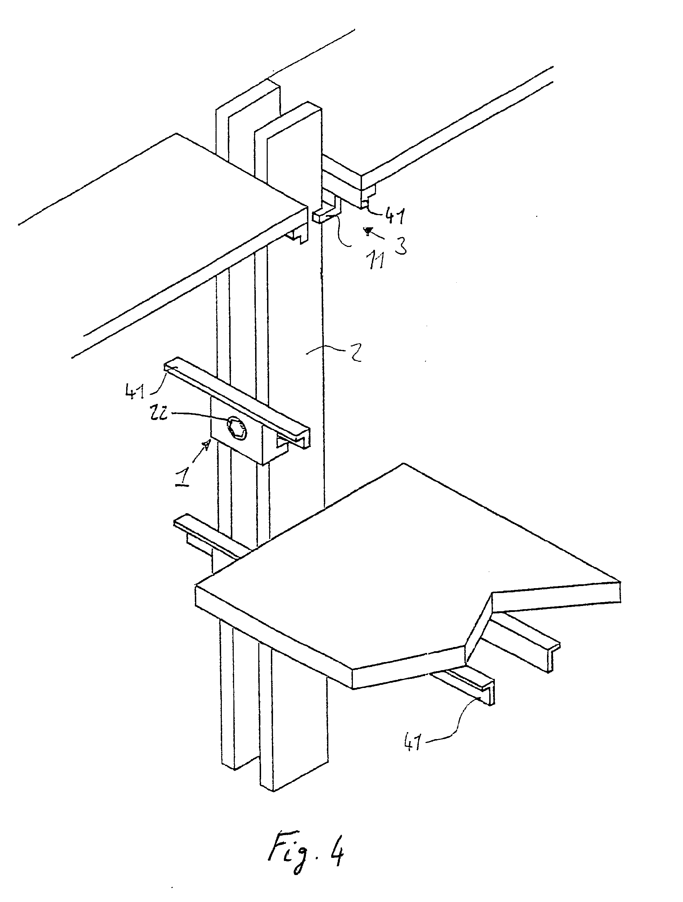

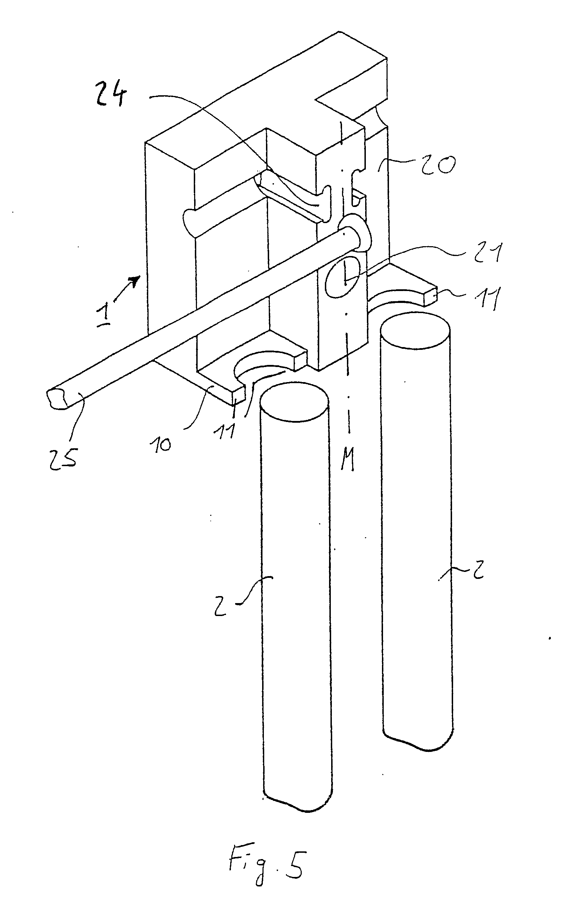

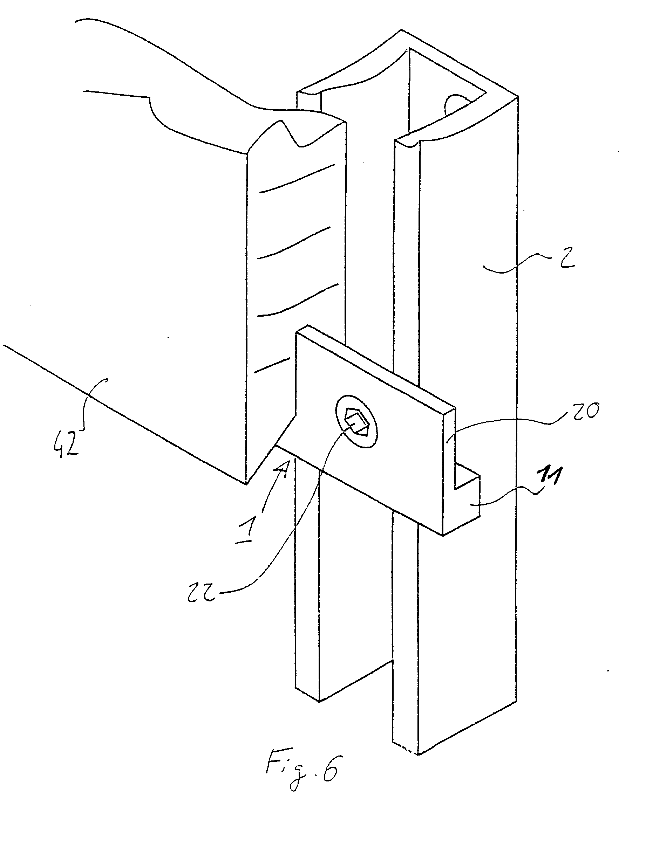

- Figur 3 -: eine Variante des Systems in Anwendung als Zaun in Teildarstellung;

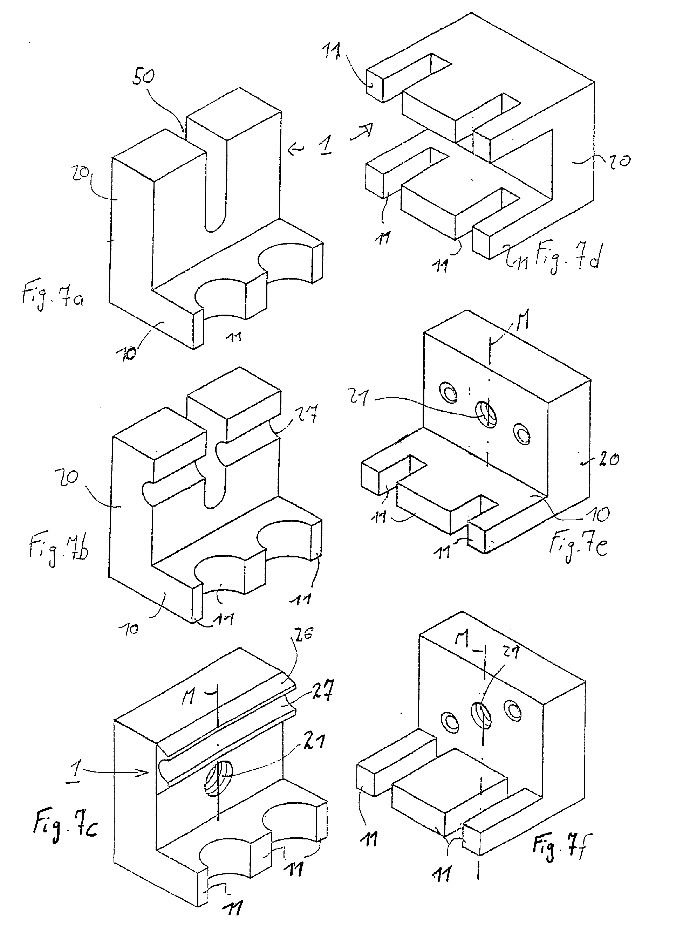

- Figur 4 -: eine Anwendung des Systems als Lagereinrichtung;

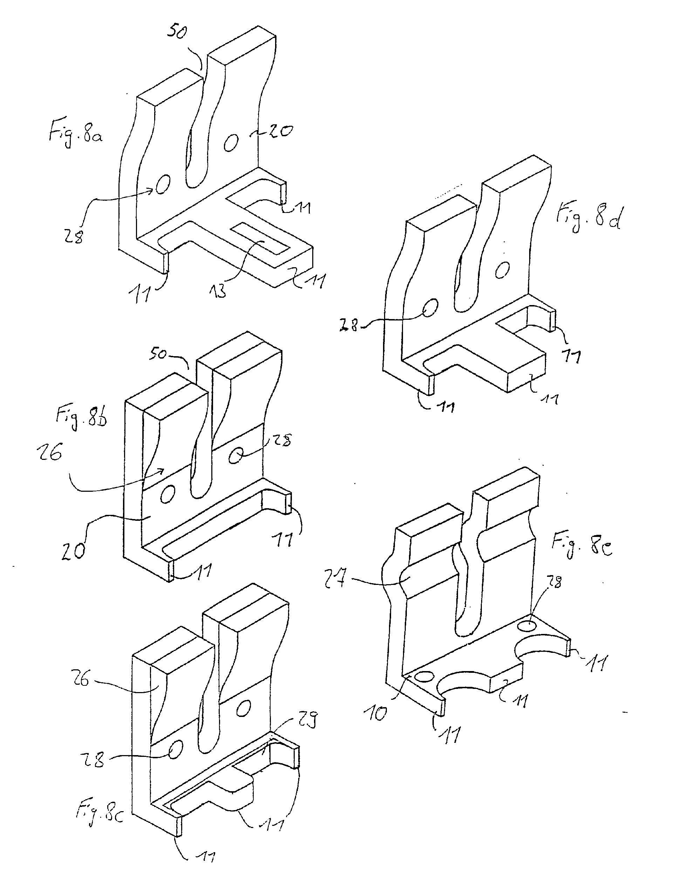

- Figur 5 -: ein Klemmelement zur Aufnahme von runden Objekten;
- Figur 6 -: ein Anwendungsbeispiel des Klemmelementes als Verkleidungsbefestigung;
- Figuren 7a - 7f -: Einzeldarstellungen von Klemmelementen,
- Figuren 8a - 8e -: Einzeldarstellungen von Klemmelementen;

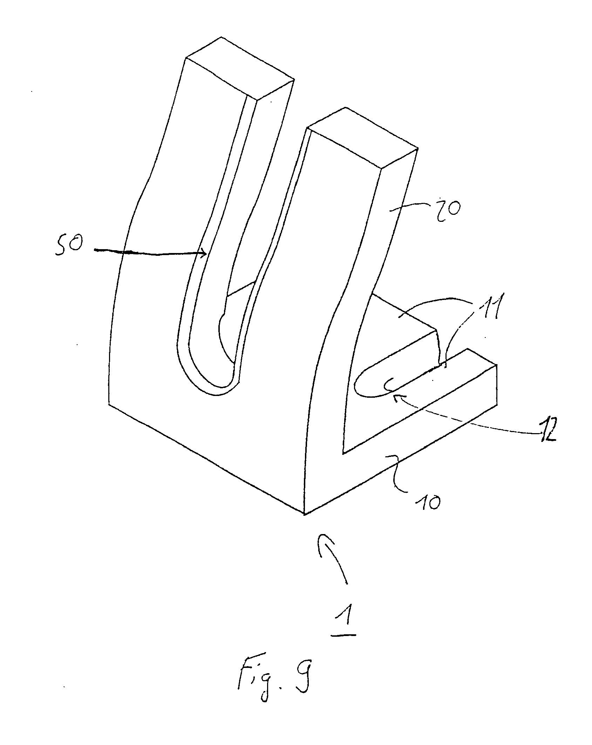

- Figur 9 -: ein Klemmelement mit einer gebogenen Klemmplatte;
- Figuren 10 und 11 -: Einzeldarstellungen von Konterelementen;

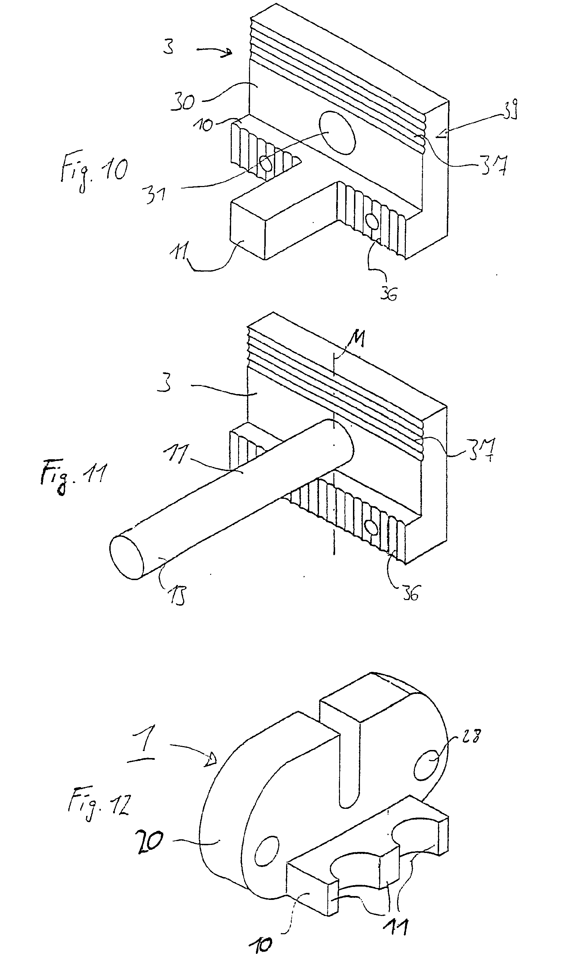

- Figur 12 -: eine Variante eines Klemmelementes;

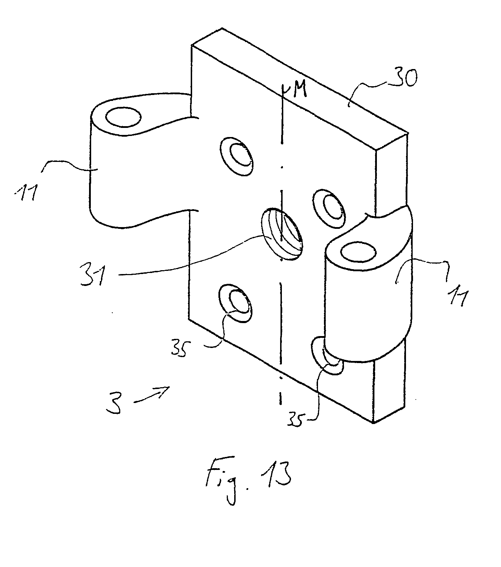

- Figur 13 -: eine Variante eines Konterelementes;

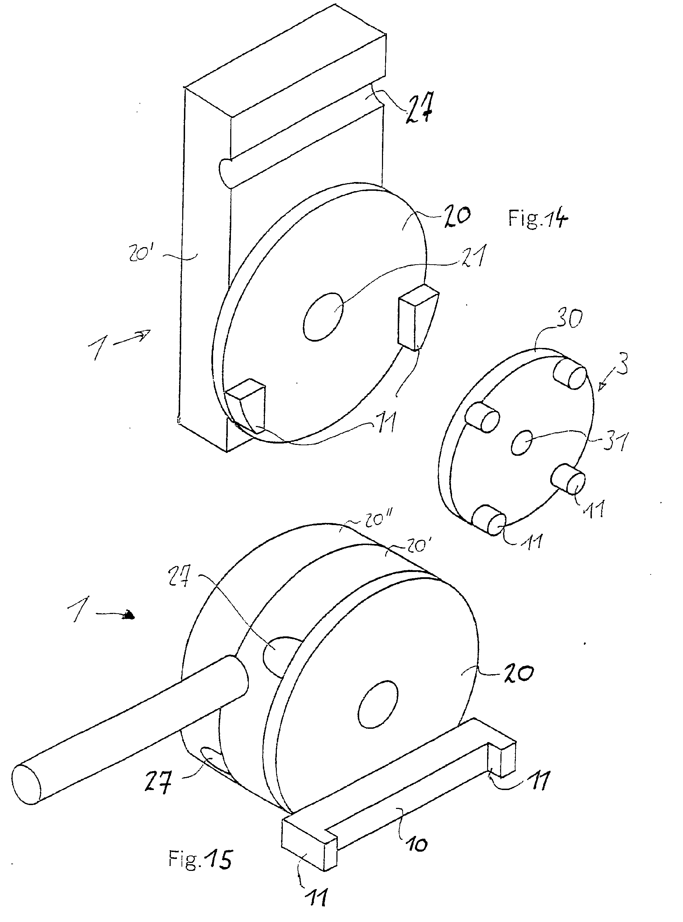

- Figur 14 -: ein Klemmelement mit einer Variante eines Teilelementes;
- Figur 15 -: ein mehrschichtig aufgebautes Klemmelement;

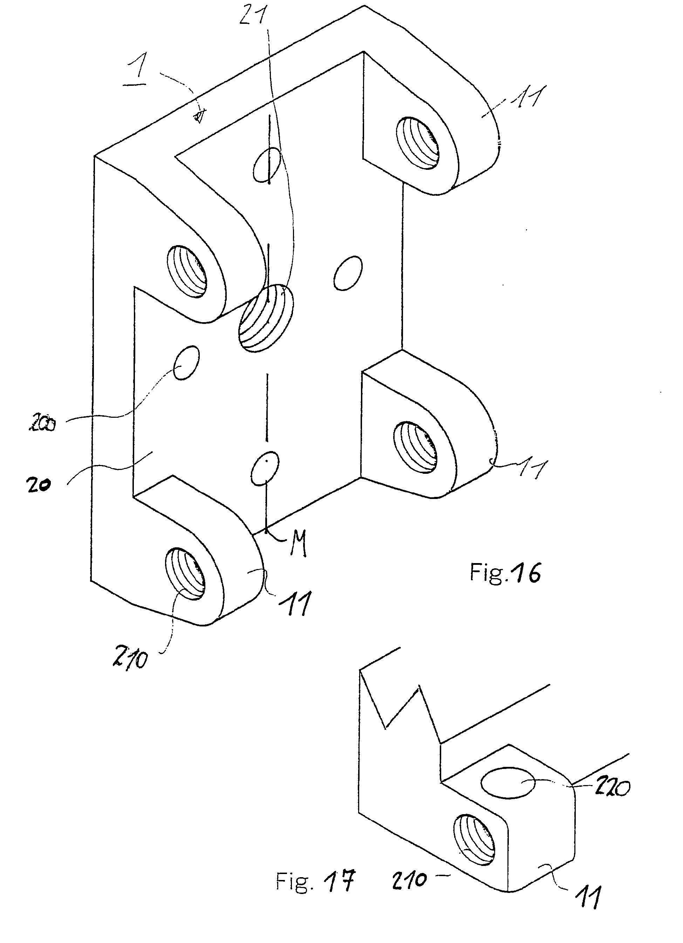

- Figur 16 -: ein Konterelement für unterschiedliche Profileinheiten und Anbaumöglichkeiten;

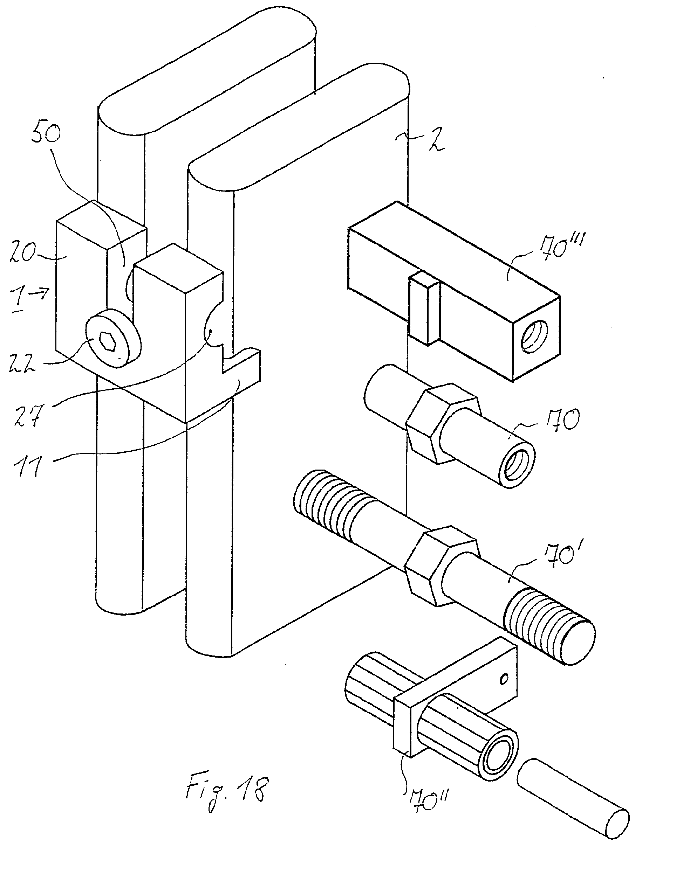

- Figur 17-: eine Einzelheit einer Basisteilvariante;

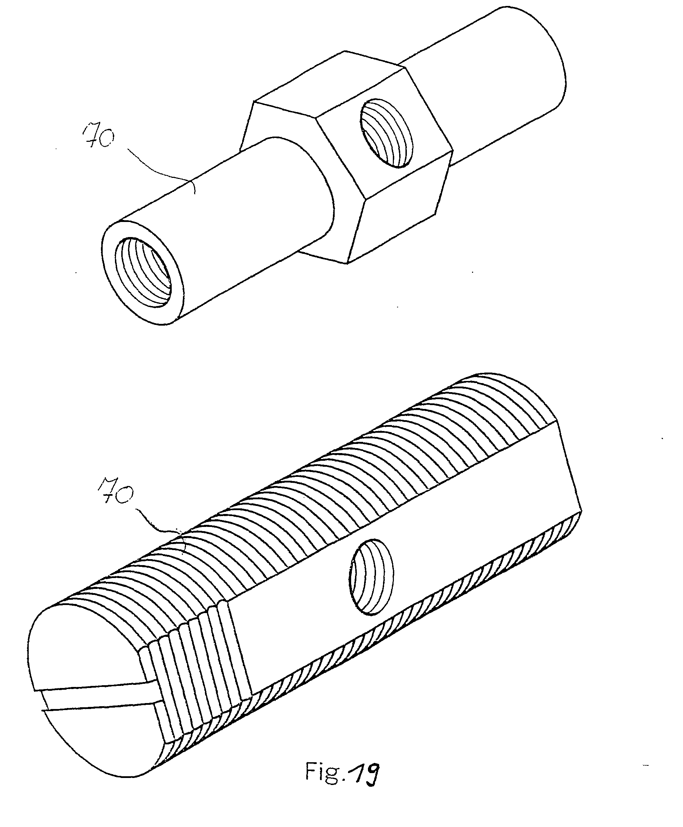

- Figur 18 -: ein teilmontiertes Klemmelement mit zugeordneten Funktionselementen;
- Figur 19 -: Funktionselemente als Konterelemente in Einzeldarstellung;

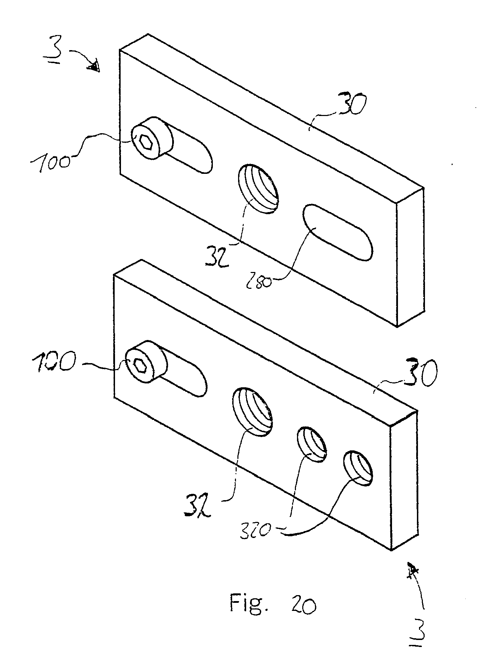

- Figur 20 -: ein mehrteilig aufgebautes Konterelement;

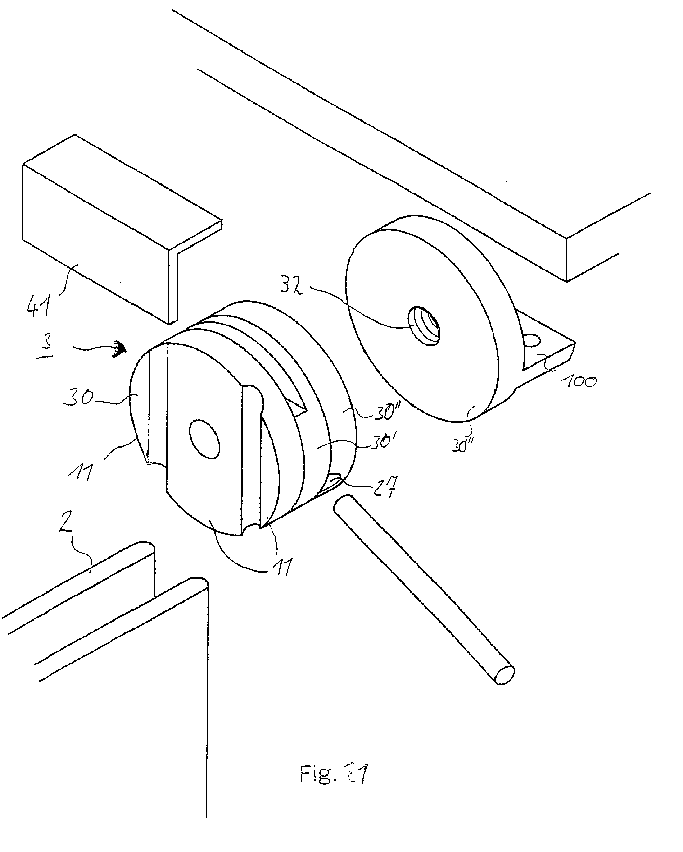

- Figur 21 -: ein mehrschichtig aufgebautes Konterelement mit eingelegten Anbauteilen; und

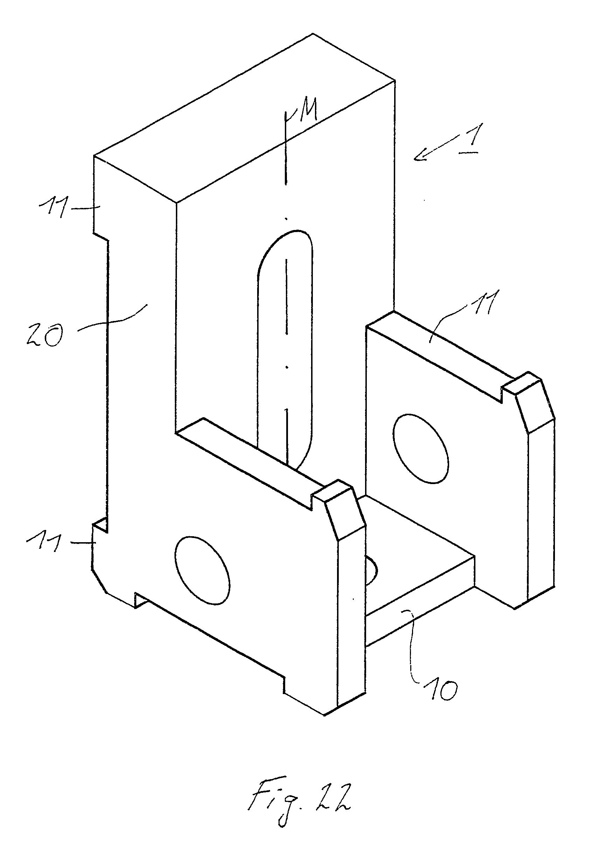

- Figur 22 -: ein einstückiges Klemmelement mit unterschiedlich orientierten Vorsprüngen.

Wie aus der nach folgenden Beschreibung hervorgeht, sind nicht alle in den Figuren dargestellten Ausführungsbeispiele von der Erfindung umfasst.

Figur 1 zeigt ein System zum Verbinden von Profilelementen 2 über ein Klemmelement 1, das mit einem Konterelement 3 über Einrichtungen zum gegenseitigen Verspannen des Klemmelementes 1 mit dem Konterelement 3 wechselwirkt. Der hier dargestellte Ausschnitt eines Tisches oder eines Bockes zeigt zwei Profilelemente 2a, die als Platten oder Leisten mit einem rechteckigen Querschnitt ausgebildet sind. Diese Profilelemente 2a sind separat angeordnet und erstrecken sich in Längsrichtung vertikal, um einen entsprechenden Ständer bzw. ein Tischbein oder Auflager zu bilden. An dem unteren Ende der Profilelemente 2a ist ein Fuß 40 angeordnet, der in der Figur 1a im Detail dargestellt ist und nicht von der Erfindung umfasst ist. Die beiden Profilelemente 2a sind parallel zueinander ausgerichtet und werden an ihren Schmalseiten von dem Klemmelement 1, genauer von den Vorsprüngen 11, die von einem an der Klemmplatte 20 angeordneten Basisteil 10 hervorstehen, teilweise umfasst. Auf der anderen Seite der Profilelemente 2a ist ein Konterelement 3 angeordnet, dessen Vorsprünge 11 die Profilelemente 2a ebenfalls umfassen und somit diese in ihrer Lage zueinander fixieren.

Das Klemmelement 1 und das Konterelement 3 werden über eine Schraube 22 gegeneinander verspannt, wobei der Fuß 40 ebenfalls eingeklemmt wird. Durch die Schrauben 22 werden sowohl die Profilelemente 2a, der Fuß 40 als auch das Klemmelement 1 und das Konterelement 3 gegeneinander verspannt. Neben einer sicheren Zuordnung der Profilelemente 2a zueinander wird somit auch das Anbauteil in Gestalt eines Fußes 40 höhenverstellbar fixiert.

An dem oberen Ende der beiden senkrechten Profilelemente 2a ist ebenfalls ein Klemmelement 1 angeordnet, dessen Aufbau später im Detail beschrieben wird. Parallel zu den Längsseiten der Profilelemente 2a erstrecken sich im rechten Winkel dazu weitere Profilelemente 2b, die einen U-förmigen Querschnitt aufweisen, wobei die Öffnungen der U's in entgegengesetzte Richtungen weisen. In der Verbindung der beiden Schenkel des U-Profils 2b sind Öffnungen eingearbeitet, in die ein Vorsprung des Konterelementes 3 eingreift, wodurch dieses formschlüssig mit den Profilelementen 2b verbunden ist. Ebenfalls über eine Schraube 22 wird nun das Klemmelement 1 mit dem zwischen den Profilelementen 2b angeordneten Konterelement verspannt, so dass die horizontal ausgerichteten Profilelemente 2b mit den vertikalen Profilelementen 2a verbunden werden, so dass ein Winkel entsteht, auf den beispielsweise eine Tischplatte oder dergleichen abgelegt werden kann.

Auch wird an dem oberen Klemmelement 1 über ein Verspannen des oberen Klemmelementes 1 mit dem korrespondierend angeordneten Konterelement 3, das beispielsweise ein Gewinde aufweist, in das die Schraube 22 eingreifen kann, eine Verbindung oder Verstrebung 41 als Auflager an den vertikal ausgerichteten Profilelementen 2a festgelegt. Durch den einfachen Aufbau der Profilelemente 2a, 2b sowie der handelsüblichen Elemente zum gegenseitigen Verspannen der Klemmelemente 1 mit den Konterelementen 3 sind ein schnelles Auf- und Abbauen, Verstellung und Anpassen sowie eine kostengünstige Fertigung des Systems und der Bauteile möglich.

Die Figur 1 b zeigt das in der Figur 1 verwendete Konterelement 3 in einem nicht von der Erfindung umfassten Ausführungsbeispiel, das von zwei Zugankern durchragt ist, an denen über Muttern die entsprechenden Kräfte eingeleitet werden können. Ein Zuganker kann dabei der Montage in einer Wand oder einem anderen Bauteil dienen und wirkt dabei gleichzeitig als ein Abstandhalter zur Wand oder zu dem Bauteil, während der andere zur Aufbringung der Klemmkräfte zwischen dem Klemmelement 1 und dem Konterelement 3 dient.

In der Figur 2 ist ein ähnliches System eines nicht von der Erfindung umfassten Anwendungsbeispiels dargestellt, bei der das Konterelement 3 an einer Wandung befestigt ist und ein Gewinde 31, wie in der Figur 2b oder 2d dargestellt, aufweist, in das die Schraube 22 zum Verspannen des Klemmelementes 1 mit dem Konterelement 3 eingreifen kann. Die Profilelemente 2, hier als Metallstreifen ausgebildet, werden gegen seitliches Wegknicken durch Vorsprünge 11 in dem Klemmelement 1 und dem Konterelement 3 gesichert. Die Befestigung des Konterelementes 3 an der Wand erhöht die Standsicherheit beispielsweise einer Regalkonstruktion oder ermöglicht es, diese mit zwei Ständern auszuführen und lediglich Tragarme vorzusehen, die an dem System angeordnet sind.

Während in der Figur 2 das Konterelement 3 mit auf dem Mittelsteg angeordneten Bohrungen 35 an der Wandung, beispielsweise einer Seitenwand, einer Decke oder einem Fußboden befestigt werden kann, sind in der Figur 2d die Bohrungen 35 in Ausnehmungen des Konterelementes 3 eingearbeitet, so dass die jeweiligen Befestigungsmittel, vorzugsweise Schrauben, versenkt das Konterelement 3 festlegen. Die Einrichtung zum gegenseitigen Verspannen mit dem Klemmelement 1 ist in der Figur 2d als eine mit einem Gewinde 31 versehene Bohrung ausgebildet, die auf einer Mittelachse M liegen, in der Figur 2c als ein Zuganker 32 und in der Figur 2b ebenfalls als eine mittig zwischen zwei Profilelementen angeordnete Gewindebohrung 31, wobei in der Figur 2b das Konterelement 3 keine separaten Bohrungen zur Wandbefestigung aufweist. Das dargestellte Konterelement 3 bildet quasi ein universelles Konterelement, das nach Bedarf mit entsprechenden Möglichkeiten zur Befestigung ausgestattet ist, beispielsweise mit einem Schlitz für einen Schraubenkopf. Hier kann das Konterelement 3 auf andere Art und Weise mit der Wandung verbunden sein, beispielsweise an einer Metallwand verschweißt oder gegebenenfalls verklebt werden. Die Ausnehmungen und Vorsprünge 11 in dem Konterelement 3 dienen jeweils zur Führung der separat -ausgebildeten Profilelemente 2 und können analog als Ausnehmungen in dem Basisteil 10 zur Bildung von Vorsprüngen 11 ausgebildet sein. In der Figur 2a ist eine Variante gezeigt, in der in das Konterelement 3 eine Hinterschneidung eingearbeitet ist, in die ein entsprechendes Verspannungselement eingeführt werden kann. Die Ausführungsbeispiele der Figuren 2a bis 2d umfassen Anwendungsbeispiele, die nicht von der Erfindung umfasst sind.

In der Figur 3 ist ein alternativer Aufbau des Systems in einem Anwendungsbeispiel als Zaun gezeigt, bei der wiederum zwei separate Profilelemente 2 vertikal angeordnet sind und einen Ständer ausbilden. Das in diesem Ausführungsbeispiel dargestellte Klemmelement 1 wechselwirkt nach dem gleichen Prinzip mit dem Konterelement 3 wie unter Figur 1 oder 2 beschrieben, jedoch ist hier ein Schlitz 50 in der Klemmplatte 20 ausgebildet, in den die Schraube 22, die die Zugkräfte auf das Konterelement 3 ausübt, eingeführt werden kann. Auf diese Weise ist es möglich, zunächst die Schraube 22 an dem Konterelement 3 vorzumontieren, das Klemmelement 1 über den Schlitz 50 einzuschieben und auf die gewünschte Position zu bringen, bevor die Schraube 22 angezogen wird, um die Profilelemente 2, das Konterelement 3 und das Klemmelement 1 gegenseitig zu verspannen.

In der Figur 3 ist deutlich ein Vorsprung 11 an dem Konterelement 3 zu erkennen, durch den die Profilelemente 2 an einem seitlichen Ausweichen gehindert werden. Ebenfalls ist hier zu erkennen, dass ein Anbauteil in Gestalt eines Auflagers 41 auf Seiten des Konterelementes in einem dafür vorgesehenen Freiraum eingesetzt wird. Je nach Ausgestaltung des Freiraumes wird das Auflager 41, als Abdeckwinkel ausgebildet, entweder locker eingesteckt oder an dem Profilelement 2 bzw. den Profilelementen 2 festgelegt. An dem Klemmelement 1 sind darüber hinaus Aufnahmen 24 für Rundkörper wie Kabel, Rohre, Drähte, Stäbe oder Versteifungselemente vorgesehen, wobei diese in dem vorliegenden Fall als Bohrungen ausgebildet sind.

Ebenfalls sind die Versteifungselemente 25 oder Zaunstäbe dergestalt einzusetzen, dass sie durch das Klemmelement an den Profilelementen 2 festgelegt werden. Um eine sichere Positionierung unter Beibehaltung vieler Variationsmöglichkeiten gewährleisten zu können, ist in einer vorteilhaften Ausgestaltung vorgesehen, in den Kontaktbereichen ein Vieleckprofil oder entsprechende Hinterschneidungen vorzusehen, durch die die Versteifungselemente zusätzlich zu der Klemmung an den Profilelementen 2 und dem Klemmelement 1 fixiert werden. Insbesondere um Türen oder Wandungen leicht einhängen zu können, ist an dem Klemmelement 1 ein Bolzen 23 vorgesehen, der als Scharnier wirkt. Dadurch ist es möglich, insbesondere beim Messebau, vielfältige Formen und variable Konstruktionen herzustellen, ohne große bauliche Maßnahmen betreiben zu müssen, insbesondere können Wandungen verschwenkt oder Türkonstruktionen über Torhaken realisiert werden. Neben einer einstückigen Ausbildung des Bolzens 23 an dem Klemmelement 1 ist vorgesehen, diesen nachträglich einzuschrauben bzw. auf andere Art und Weise an dem Klemmelement 1 zu befestigen.

In der Figur 4 ist ein Beispiel einer Regalkonstruktion gezeigt, bei dem über das Klemmelement 1 und das Konterelement 3 Auflager 41 in beliebiger Höhe, auch um 90° gekippt, an den Profilelementen 2 befestigt werden können. Die Auflager 41 bilden die Basis für Platten oder Roste, auf denen die jeweiligen Gegenstände abgestellt werden können. Aufgrund des Klemmprinzips ist es möglich, die Höhen beliebig und stufenlos zu verstellen. Durch einfaches Lösen und Festziehen der Schraube 22 ist es möglich, ohne die Regalböden zu entfernen, eine Verstellung vorzunehmen. Durch die verschiedenen Ausgestaltungen der Auflager 41 ist es möglich, Träger als endständige Auflager oder unter Platten durchlaufend als Unterstützung einzusetzen oder die Regalböden in verschiedenen Orientierungen an dem Ständer zu befestigen. Im vorliegenden Ausführungsbeispiel sind die Auflager 41 als Winkelprofile ausgebildet, es sind jedoch alternative Ausgestaltungen möglich. Das Winkelprofil hat jedoch den Vorteil, dass die Regalböden eine sichere Auflage oder eine Unterstützung gegen das Durchbiegen haben. Als Alternative sind Rundprofile oder streifenförmige Auflager 41 denkbar.

In der Figur 5 sind die Profilelemente 2 als Rundkörper ausgebildet und die korrespondierenden Vorsprünge 11 in dem Klemmelement 1 sind ebenfalls gerundet. Die Rundung, die durch die Vorsprünge 11 gebildet wird, ist dabei so groß, dass eine ausreichende seitliche Fixierung gewährleistet ist, so dass die aufzubringenden Klemmkräfte in einem vertretbaren Rahmen gehalten werden. Vorliegend ist die Klemmplatte 20 zur Verbindung voneinander isolierter Profilstrukturen ausgebildet. In dem Mittelsteg der Klemmplatte 20 sind Ausnehmungen eingearbeitet, deren Hinterschneidungen mit entsprechenden endständigen Kopfformen der einzuspannenden Rundelemente korrespondieren. Durch Formschluß werden seitliches Herausrutschen oder eine Berührung der eingespannten Profile verhindert.

Werden die Klemmplatten 20 und die Konterelemente 3 aus isolierendem Material hergestellt oder mit einem solchen überzogen, ist die Verbindung mit elektrisch leitenden Materialien möglich. So können stromführende Systeme z.B. für Niederspannungsleuchten gebildet werden. Die hier gezeigte Bohrung 21 dient zur Aufnahme einer Schraube oder eines Zugankers zur Verspannung mit dem Konterelement 3 und ist auf der Mittelachse M zwischen zwei Profilelementen 2 angeordnet.

Weiter ist eine Aufnahme 24 eingearbeitet, vorzugsweise eingefräst, in die ein Metall als Leiter und/oder Versteifung 25 eingeführt werden kann. In den Mittelsteg der Klemmplatte ist ein entsprechendes Profil eingefräst, über das formschlüssig Kräfte aufgenommen werden können, so dass eine gute Versteifungswirkung erzielt und ein Herausrutschen verhindert wird. Ebenfalls ist in dem Mittelsteg der Klemmplatte 20 eine Bohrung 21 oder ein Gewinde eingearbeitet, über das die entsprechenden Zugkräfte auf das nicht dargestellte Konterelement 3 ausgeübt werden kann. Auch hier ist der Vorteil in der leichten Verfügbarkeit der als Ständer zu verwendeten Profilelemente 2 sowie die universelle Einsetzbarkeit und die stufenlose Einstellbarkeit bei gleichzeitiger hoher spezifischer Belastbarkeit gegeben.

Alternativ zu den bislang geschilderten Ausführungsformen ist in der Figur 6 ein nicht von der Erfindung umfasstes Anwendungsbeispiel eines Klemmelementes 1 dargestellt, bei der eine Befestigung des Profils 2 direkt über die Schraube 22 und das Klemmelement 1 an einer Wandung, bzw. Decke oder dem Fußboden erfolgt. Das Widerlager, analog zu dem Konter-element 3, wird somit durch die Wandung gebildet und dient zur Aufnahme der Zugkräfte, über die das Klemmelement 1 an dem Profil 2, in der Figur 6 vorliegend als ein U-Profil ausgebildet, festgelegt wird. Über die Schraube 22, die zum Beispiel in einen in die Wand eingelassenen Dübel eingreift, werden sowohl das Profilelement 2, das Klemmelement 1 als auch eine Wandverkleidung 42 an der Wandung befestigt, was beispielsweise beim Aufstellen von Schautafeln oder bei der Befestigung von Fassadenplatten, Leinwänden, Stecktafeln oder Werkzeughaltern oder Ähnlichem von Vorteil ist.

Die Figuren 7a - 7f zeigen jeweils Ausgestaltungen von Klemmelementen 1, die an den jeweiligen Einsatzzweck angepasst sind. Die Figur 7a zeigt ein Klemmelement 1 mit einem Basisteil 10 und der senkrecht dazu ausgebildeten Klemmplatte 20, in die ein Schlitz 50 zur Einführung eines Zugankers oder einer Schraube ausgeformt ist. Die in das Basisteil 10 eingearbeiteten Ausnehmungen bilden Vorsprünge 11 aus, die hier rund ausgebildet sind und zur Aufnahme entsprechend geformter Profilelemente 2 dienen. Die Ausnehmungen erstrecken sich nicht ganz bis an die Klemmplatte 20, wodurch ein Freiraum im montierten Zustand entsteht, in die ein entsprechendes Anbauteil eingelegt oder eingeklemmt werden kann.

In der Figur 7b ist ein Klemmelement 1 entsprechend der Figur 7a dargestellt, allerdings weist die Klemmplatte 20 eine Ausfräsung für eine Rundmaterial- oder Kabeldurchführung 27 auf. Auf diese Weise lassen sich einerseits Anbauteile fest mit den entsprechenden Profilelementen 2 verklemmen und gleichzeitig können notwendige Kabel sauber geführt werden.

Eine entsprechende Rundmaterial- oder Kabelführung 27 ist auch in der Figur 7c gezeigt, die ähnlich der Figur 7a für runde Profilelemente 2 ausgebildet ist, jedoch statt eines Schlitzes 50 eine Gewindebohrung 21 als Einrichtung zum gegenseitigen Verspannen mit dem nicht dargestellten Konterelement 3 auf der Mittelachse M aufweist. Alternativ zu der Ausfräsung gemäß Figur 7b ist die Kabelführung 27 als Ausformung eines Schonelementes 26 ausgebildet, das von der Klemmplatte 20 in Richtung auf das Profilelement 2 hervorsteht. Dieses Schonelement 26 kann aus einem Kunststoff gefertigt sein, um ein Eindrücken und eine Beschädigung der Oberfläche der Profilelemente 2 zu vermeiden.

In der Figur 7d wird die Aufgabe der Vorsprünge 11 als Ausnehmungen in dem Basisteil 10 bzw. in den Basisteilen 10 deutlich. In diesem Fall erstreckt sich die Klemmplatte 20 zwischen zwei parallel angeordneten Basisteilen 10, die jeweils sich deckende Ausnehmungen und Vorsprünge 11 aufweisen. Durch die als Schlitze ausgebildeten Ausnehmungen, in die die entsprechenden Abschnitte der Profilelemente 2, beispielsweise Platten oder U-Profile, eingeführt werden, wird eine erste Lagefixierung vorgenommen und ein seitliches Ausweichen der Profilelemente 2 durch die entstehenden Vorsprünge 11 verhindert.

Die Figuren 7e und 7f zeigen Klemmelemente 1 mit auf der Mittelachse M des Klemmelementes 1 angeordneten Gewindebohrungen 21 zur Ausübung der Klemmkräfte, wobei die Ausgestaltungsform der Figur 7f ein nicht von der Erfindung umfasstes Anwendungsbeispiel des Klemmelementes darstellt. Die Gewindebohrungen 21 sind mittig zu den Vorsprüngen 11 angeordnet, so dass keine Kippmomente bezüglich der Profilelemente 2 entstehen. Zusätzlich dazu sind beidseitig von den Gewindebohrungen 21 zusätzliche Fixierlöcher mit Gewinden versehen, in die Anbauteile oder Halterungen eingeschraubt werden können. Während ein Klemmelement 1 gemäß der Ausführung der Figur 7e an der Klemmplatte 20 noch einen Steg oder ein Basisteil 10 aufweist, über den/das der Abstand an der Klemmplatte 20 zu den Profilelementen 2 hergestellt wird, beginnen die Vorsprünge 11 in der Figur 7f unmittelbar an der Klemmplatte 20, wodurch diese direkt an den Profilelementen 2 im montierten Zustand anliegt. Der Steg in der Figur 7e wirkt als ein Gegenlager beim Spannen, wodurch die eingespannten Bauteile sicher fixiert werden.

Die Figuren 8a - 8e zeigen weitere Ausgestaltungen der Klemmelemente 1, wobei in der Figur 8a zusätzlich zu den entsprechenden Einrichtungen zur Ausübung der Zugkräfte an der Klemmplatte 20 auch an dem Basisteil eine solche Einrichtung 13 vorgesehen ist. Diese besteht aus einen Vorsprung 11, in den eine Ausnehmung 13 eingearbeitet ist, in die beispielsweise ein Keil eingeführt werden kann. Auf diese Art und Weise wird eine einfache Keilverbindung zwischen den Profilelementen 2, die zwischen die Vorsprünge 11 eingelegt werden, und dem Konterelement 3, was eine entsprechende Ausnehmung für die Durchführung des Vorsprungs 11 mit der Ausnehmung 13 aufweist, hergestellt. Zusätzlich dazu sind in der Klemmplatte 20 Bohrungen 28 vorgesehen, um Anbauteile einzuhängen oder entsprechende Kabel oder Bauteile durchzuführen oder mit einzuklemmen, beispielsweise Diagonalverstrebungen.

In der Figur 8b ist eine Variante des Klemmelementes 1 gezeigt, die nicht von der Erfindung umfasst ist, bei der zwei seitliche Vorsprünge 11 vorgesehen sind, was beispielsweise bei Kastenprofilen als Profilelement 2 oder entsprechend stabilen U-Profilen möglich ist. Statt der gebogenen Ausführung in den Figuren 8a oder 8d ist an der Klemmplatte 20 ein Schonelement 26 befestigt, um die Profilelemente 2 bzw. die eingeklemmten Bauteile vor Druckstellen zu schützen. Ebenfalls wird dadurch eine gleichmäßige Druckverteilung erreicht. Der Schlitz 50 zur Aufnahme der Schraube 22 oder eines entsprechenden Zugankers 32 ist mittig zu den Vorsprüngen 11 angeordnet, um eine gleichmäßige Verspannung von Klemmelement 1 und Konterelement 3 mit dem Profilelement 2 zu erreichen.

Die Figur 8c zeigt eine Variante der Figur 8b, allerdings mit drei Vorsprüngen 11, zwischen denen eine Beschichtung 29 eingearbeitet ist, so dass auch an dieser Kontaktstelle keine Beschädigung des Profilelementes 2 auftritt oder eine Isolierung bewirkt wird.

In der Figur 8d ist eine Variante der Figur 8a dargestellt, bei der der mittlere Vorsprung 11 nicht für die Ausbildung einer Keilverbindung eine Ausnehmung aufweist. Der verlängerte, mittlere Vorsprung 11 dient zur Erhöhung der Stabilität in der Fixierung der separaten Profilelemente 2 oder Befestigung/Auflager von Bauteilen. Auch hier ist die Klemmplatte 20 gebogen ausgebildet, wodurch sich eine federnde Anlage und gleichmäßige Flächenpressung an die Profilelemente 2 erreichen oder Rundmaterial einfach klemmen lässt.

In der Figur 8e ist eine Rundmaterial- oder Kabeldurchführung 27 z.B. mittels eines Umformverfahrens wie Biegen oder Pressen in die Klemmplatte 20 eingearbeitet. In dem Basisteil 10 sind darüber hinaus Bohrungen 28 eingebracht, in die zum Beispiel Zapfen oder Bolzen zur Ausbildung eines Scharnieres eingeführt werden können.

Die Figur 9 zeigt ein Klemmelement 1 mit Vorsprüngen 11 an dem Basisteil 10, wobei zumindest zwischen zwei Vorsprüngen 1 1 eine Schneide 12 ausbildet ist, mit der die Befestigung an den nicht dargestellten Profilelementen 2 verbessert werden kann. Die Klemmplatte 20 ist in Richtung auf das Profilelement 2 geneigt und weist einen Schlitz zur Aufnahme einer Schraube 22, eines Hakens oder eines Keiles auf. Der Winkel zwischen der Klemmplatte 20 und dem Basisteil 10 beträgt zumindest im Endbereich der Klemmplatte 20 weniger als 90 °.

Die Figur 10 zeigt ein Konterelement 3, das eine Gewindebohrung 31 zur Aufnahme einer Schraube mittig zwischen zwei nicht dargestellten Profilelementen aufweist. Ein Vorsprung 11 dient zur Fixierung und ein Basisteil 10 als Abstandshalter oder Absatz der Profilelemente 2 von der Basisplatte 30, und es ist weiterhin in dem Bereich des Basisteils 10 eine Riffelung 36 vorgesehen, die ein seitliches Verlagern der Profilelemente 2 verhindert, wenn diese an der Riffelung 36 anliegen. Ebenfalls sind Retentionseinrichtungen 37 an dem rechtwinklig zu dem Vorsprung 11 ausgebildeten Klemmbereich 39 ausgebildet, die vorliegend ebenfalls als Riffelungen 37 ausgestaltet sind und über die ein Verrutschen eingeklemmter Bauelemente verhindert wird. Ebenfalls können Profile, auch aus Holz, eingeklemmt werden, die breiter als das Konterelement 3 sind.

In der Figur 11 ist eine Abwandlung des in der Figur 10 dargestellten Konterelementes 3 gezeigt, bei der statt der Gewindebohrung 31 ein Zuganker 13 entweder in das Halteelement 3 eingeschraubt oder an diesem angeformt ist und als Vorsprung 11 dient. An dem dem Klemmelement 1 zugewandten Ende des Zugankers ist ein nicht dargestelltes Gewinde 13 eingearbeitet, um eine Verschraubung zu realisieren. Abweichend von einem Gewinde kann dort auch eine Hinterschneidung oder eine Ausnehmung zum Einführung einer Klammer oder eines Keiles ausgebildet sein, durch die das Konterelement 3 mit dem Klemmelement 1 verspannt wird. Die Figur 12 zeigt eine Variante des Klemmelementes 1 mit in der Klemmplatte 20 angeordneten Befestigungsbohrungen 28 und einem als Absatz ausgebildetes Basisteil 10.

In der Figur 13 ist ein Konterelement 3 dargestellt, das nicht von der Erfindung umfasst ist, in das Bohrungen oder Gewinde 35 eingearbeitet sind, ebenso wie ein Gewinde 31 zur Aufbringung der erforderlichen Zugkräfte. Ebenfalls sind Scharniere in den Vorsprüngen 11 an dem Konterelement 3 angeformt, in die Türen oder andere, verschwenkbare Bauteile eingehängt werden können. Ein Vorteil dieser Ausgestaltung liegt darin, dass die Scharniere einerseits die nicht dargestellten Profilelemente gegen seitlichen Ausweichen sichern und dass andererseits bei umgekehrter Montage sich die Scharniere auf der Rückseite der Kombination Klemmelement 1 und Konterelement 3 befinden, wodurch die Variationsmöglichkeiten bei dem Aufbau des Systems erhöht werden.

Durch das beschriebene System bzw. Klemmelement 1 und Konterelement 3 ist es in vielen Bereichen, beispielsweise der Raumausstattung, Gebäudetechnik, Dekoration, Lagerwesen und Messebau möglich, handelsübliche Bauteile freistehend aufzustellen, untereinander zu befestigen oder aber an bestehende Konstruktionen anzukoppeln. Ebenso können Absperrungen und Geländer hergestellt werden, Blenden oder Transparente fixiert oder Verkaufshilfen oder Laborkonstruktionen errichtet oder miteinander gekoppelt werden. Ästhetischen Gesichtspunkten folgend können Profile doppelt und parallel eingesetzt werden, was die Stabilität der Gesamtkonstruktion erhöht. Mit einfachen Mitteln, die in der Herstellung und Anwendung unkompliziert und preiswert sind, kann eine nahezu unbegrenzte Verstellbarkeit, eine lösbare, wiederverwendbare und beliebig kombinierbare Konstruktion bereitgestellt werden. Vorzugsweise werden Metall oder Kunststoffe als Material für die Elemente des Systems bzw. des Klemmelementes eingesetzt. Die Beschichtungen können zur Isolierung oder als Korrosionsschutz oder als Haftungsverbesserer ausgebildet sein.

Figur 14 zeigt ein Klemmelement 1, das nicht von der Erfindung umfasst ist, bestehend aus einer ersten Klemmplatte 20 und einer in Verspannrichtung axial dahinter angeordneten zweiten Platte 20' und einem der Klemmplatte 20 gegenüberliegenden Konterelement 3. Sowohl in dem Klemmelement 1 als auch in dem Konterelement 3 sind Einrichtungen 21, 31 zum gegenseitigen Verspannen vorgesehen, vorliegend sind diese als Bohrungen bzw. als Gewinde ausgebildet. Die Klemmplatte 20 ist kreisförmig ausgebildet, und von ihr ragen rechtwinklig Vorsprünge 11 hervor, an die ein Profilelement oder ein entsprechend anders ausgestaltetes Bauteil angelegt werden kann. Oberhalb der Klemmplatte 20 ist in der zweiten Platte 20' eine nahezu halbkreisförmige Ausnehmung 27 zum Einlegen von Kabeln, Rundmaterial, Gewindestangen oder dergleichen vorgesehen. In Verbindung mit den einzuklemmenden Profilelementen wird das in die Ausnehmung 27 eingelegte Rundmaterial fixiert und festgelegt. Auf Grund der zweiteiligen Ausbildung des Klemmelementes 1 mit der ersten Klemmplatte 20 und der zweiten Klemmplatte 20' wird eine leichte Winkeleinstellbarkeit der zweiten Klemmplatte 20' zu der ersten Klemmplatte 20 bzw. dem darin festgelegten Profilelement realisiert.

Auf dem Konterelement 3 sind Befestigungseinrichtungen oder Vorsprünge 11 angeordnet, die zum Beispiel Gewinde aufnehmen können oder in die ebenfalls Profilelemente eingelegt werden können, so dass durch diese Ausgestaltung des Konterelementes 3 eine Verkettung verschiedener Segmente möglich ist. Diese Vorsprünge 11 können einstückig ausgebildet oder nachträglich montiert sein; es ist ebenfalls möglich, dass diese Vorsprünge 11 beweglich und festlegbar auf dem Konterelement 3 angeordnet sind, um eine leichte Anpassbarkeit an verschiedene Einsatzzwecke zu bewirken.

Die Figur 15 zeigt ein Klemmelement 1, das nicht von der Erfindung umfasst ist, das aus drei Klemmplatten 20, 20' und 20" aufgebaut ist, wobei an der ersten Klemmplatte 20 ein Basisteil 10 angeordnet ist, das Vorsprünge 11 zur Aufnahme eines Profilelementes aufweist. In der zweiten Klemmplatte 20' ist auf beiden Stirnseiten eine Ausnehmung mit einem halbkreisförmigen Querschnitt eingearbeitet, die entweder als Befestigung für Rundmaterial oder zur Festlegung von Kabeln dienen kann oder aber bei einer entsprechenden Ausrichtung mit einer korrespondierenden Ausnehmung in der dritten Klemmplatte 20" ist es möglich, durch Einlegen eines entsprechenden Bauteiles die Klemmplatten 20' und 20" gegeneinander festzulegen, um so eine definierte Winkelstellung zu erreichen. Nach Herausziehen dieses Bauteiles ist eine Verstellung ohne weiteres möglich, so dass eine formschlüssige Rastung in einer anderen Winkelstellung, in der zwei Ausnehmungen verschiedener Klemmplatten zueinander entsprechend ausgerichtet sind, möglich ist.

In der Figur 16 ist eine Variante des Klemmelementes 1 dargestellt, das nicht von der Erfindung umfasst ist, das eine rechteckige Klemmplatte 20 aufweist, an deren vier Ecken jeweils Vorsprünge 11 ausgebildet sind, die im wesentlichen rechtwinklig von der Klemmplatte 20 abstehen. Die Vorsprünge 11 sind einander gegenüberliegend ausgebildet und weisen zwischen sich jeweils eine Ausnehmung auf, in die Profilelemente eingelegt werden können. Auf Grund des rechteckigen Formates der Klemmplatte 20 ist es möglich, durch eine Drehung des Klemmelementes 1 um 90° verschiedene Profilweiten festzulegen bzw. eine Anpassung an zwei unterschiedliche Profilweiten vorzunehmen. In den Vorsprüngen 11 selbst ist je ein Gewinde 210 vorgesehen, in welches Schrauben oder Gewindestangen eingeschraubt werden können, um entweder die Profile festzuklemmen oder Anbaumöglichkeiten oder Verstrebungen zu schaffen. Ebenfalls sind Ausnehmungen 200 in der Klemmplatte 20 vorgesehen, um Bauteile dort einzulegen oder beispielsweise um ein Konterelement gemäß der Figur 1 dort einzulegen.

In der Figur 17 ist eine Variante der Figur 16 gezeigt, bei der ein Vorsprung 11 mit einem Gewinde 210 und eine Bohrung 220 versehen ist, um so Bauteile einstecken oder fixieren zu können.

Die Figur 18 zeigt teilmontiert zwei Profilelemente 2 mit einem Klemmelement 1, das über eine Schraube 22 mit einem nicht dargestellten Konterelement 3 verbunden ist, um die Profilelemente 2 gegeneinander zu verspannen und festzulegen. In der Klemmplatte 20 ist ein nach oben offener Schlitz 50 ausgebildet, durch den einerseits die Schraube 22 eingeführt werden kann, der aber auch andererseits als Aufnahme für die seitlich versetzt angeordneten, zur Montage vorgesehenen Funktionselemente 70, 70' und 70'' dient. Auch hier ist in der Klemmplatte 20 eine Ausnehmung 27 vorgesehen, in der die Funktionsdrehteile 70, 70' und 70" eingelegt und gegenüber den Profilelementen 2 verspannt werden können. Durch das Vorsehen eines Außensechskantes ist es möglich, die mit einem Innengewinde oder Außengewinde versehenen Funktionsteile 70 und 70' formschlüssig zwischen den Profilelementen und innerhalb des Schlitzes 50 zu sichern und gegebenenfalls durch einen geeigneten Schraubenschlüssel zu kontern, falls ein entsprechend hohes Drehmoment auf das Funktionsdrehteil 70, 70' ausgeübt wird. Alternativ zu einem solchen Außensechskant ist ein Steg mit einem formschlüssigen Rastelement vorgesehen, das beispielsweise als Lagerbuchse für eine Jalousie, für ein Rollo oder für andere zu drehende Elemente dienen kann. Das Funktionsdrehteil 70" kann ebenso wie der Außensechskant zu einer inneren Stabilisierung der Profilelemente 2 führen, so dass auf einen in dem Basisteil vorgesehenen Mittelsteg verzichtet werden kann. Zur Verringerung der Flächenpressung ist das Funktionsteil 70'" mit einem viereckigen Querschnitt ausgebildet, wobei die Ausnehmung 27 eine entsprechende Gestalt aufweist.

In der Figur 19 sind verschiedene Ausgestaltungen der Funktionsdrehteile 70 dargestellt, die in die Ausnehmung 27 des Klemmelementes 1 eingelegt werden können und als Konterelement wirken, wobei das obere Funktionselement mit einem Innengewinde und einem Außensechskant mit einer rechtwinklig zu dem Innengewinde verlaufenden Gewindebohrung versehen ist, so dass ein Verspannen mittels einer Schraube 22 auch unmittelbar durch das Funktionselement 70 erfolgen kann. Alternativ zu der Ausgestaltung mit einem Außengewinde ist es vorgesehen, eine Gewindestange mit zumindest einer abgeflachten Längsseite zur Lagefixierung vorzusehen, wobei an den Stirnseiten Ausnehmungen in Gestalt eines Schlitzes oder eines Innensechskantes ausgebildet sein können, um eine Fixierung und Ausrichtung innerhalb der Ausnehmung 27 oder einer entsprechenden Bohrung vorzunehmen. Die abgeflachte Längsfläche kann den Einsatzbedingungen entsprechend beschichtet sein oder Riffelungen aufweisen, die ein einfaches Herausziehen erschweren. Analog zu der obigen Ausgestaltung weist auch hier das Funktionselement eine senkrecht zu dem Außengewinde verlaufende Gewindebohrung auf.

In der Figur 20 ist eine Weiterbildung des Konterelementes 3 gezeigt, das aus einer Klemmplatte 30 und darin angeordneten Gewindebohrungen 32 zum Verspannen mit einem korrespondierenden Klemmelement 1 besteht. Innerhalb der Klemmplatte 30 sind Basiselemente 100 vorgesehen, wobei in der vorliegenden Figur nur ein Basiselement 100 aus Gründen der Übersichtlichkeit dargestellt ist. Das Basiselement 100 ist in einem Langloch angeordnet und besteht aus einer Schraube, vorliegend aus einer Innensechskantschraube, die einen Anschlag für ein nicht dargestelltes Profilelement 2 bietet. Auf der der Gewindebohrung 32 gegenüberliegenden Seite ist entweder ein Langloch 280 oder sind zwei Gewindebohrungen 320 in der Klemmplatte 30 eingearbeitet, um dort ebenfalls ein Basiselement 100 einzuschrauben bzw. dort festzulegen. Bei einer Ausgestaltung mit einem Langloch 280 ist eine stufenlose Einstellbarkeit des Zwischenraumes 110 zwischen den Basiselementen 100 möglich, wobei hier der Einstellaufwand höher als bei der unteren Darstellung ist, bei der vorgegebene Positionen auf Grund der eingearbeiteten Gewindebohrungen 320 eingestellt werden können und gleichzeitig als Wandbefestigung dienen.

In der Figur 21 ist eine Alternativausgestaltung eines Konterelementes 3 dargestellt, das aus verschiedenen Klemmplatten 30, 30', 30", 30''' ausgebildet ist und auf Grund der schichtartigen Anordnung einerseits beliebig erweiterbar und andererseits in der Winkeleinstellung zueinander veränderbar ist.

Das Konterelement 3 der Figur 21, das nicht von der Erfindung umfasst ist, zeigt zudem, dass durch die Anordnung von Vorsprüngen 11 auf der einen Seite und eine Anordnung eines Basiselementes 100 auf der gegenüberliegenden Seite an einer anderen Klemmplatte 30'" eine Aneinanderreihung mehrerer Bauelemente in Verspannrichtung möglich ist, so dass komplexe Regalsysteme oder Aufbauten wie Messeständen oder Gerüste leicht realisiert werden können. Die Zwischenschichten 30' und 30" dienen zur Aufnahme verschiedener Bauteile bzw. Auflager 41, so dass z.B. Kabel entlang einer Ausnehmung 27 parallel zu den entsprechenden Auflagen 41 sauber verlegt werden können.

Die Figur 22 zeigt ein Klemmelement 1 mit einer senkrechten Klemmplatte 20, die eine Langlochausnehmung aufweist, in die Einrichtungen zum Verspannen mit einem nicht dargestellten Konterelement eingeführt werden können. Beidseitig der Klemmplatte 20 sind Vorsprünge 11 ausgebildet, die als Anschlag für aufzunehmende bzw. einzulegende Profilelemente dienen. Zwischen den sich nach vorne erstreckenden Vorsprüngen 11 ist an dem unteren Ende ein Basisteil 10 angeordnet, so dass das dargestellte Klemmelement 1 als Fuß oder Basis für Aufbauten bzw. Regale dienen können. Durch die Bohrungen innerhalb der Vorsprünge 11 kann eine Vielzahl an Befestigungs- oder Verspannungsmitteln eingeführt und eine entsprechende Verstrebung oder Befestigung von Anbauteilen erfolgen.

## Patentansprüche

1. System zum Verbinden von Profilelementen (2) mit Anbauteilen (40, 41, 42),
a) mit einem separaten Klemmelement (1) mit einer Klemmplatte (20) und zumindest einem, im wesentlichen senkrecht zu der Klemmplatte (20) ausgebildeten Vorsprung (11) als Anschlag für die Profilelemente (2), wobei der Vorsprung (11) eine Verlagerung der Profilelemente (2) in Richtung senkrecht zu dessen Längserstreckung und parallel zu der Klemmplatte (20) formschlüssig verhindert,
b) mit einem separaten Konterelement (3) mit einer Basisplatte (30) und zumindest einem, im wesentlichen senkrecht zu der Basisplatte (30) ausgebildeten Vorsprung (11) als Anschlag für die Profilelemente (2), wobei der Vorsprung (11) eine Verlagerung der Profilelemente (2) in Richtung senkrecht zu dessen Längserstreckung und parallel zu der Basisplatte (30) formschlüssig verhindert,
c) wobei im montierten Zustand das Konterelement (3) an der dem Klemmelement (1) gegenüberliegenden Seite der Profilelemente (2) dergestalt anliegt, dass die Vorsprünge (11) des Konterelementes (3) und des Klemmelementes (1) einander zugewandt sind,
d) an dem Klemmelement (1) und an dem Konterelement (3) sind Einrichtungen (21, 22; 31, 32) zum gegenseitigen Verspannen in Richtung aufeinander zu vorgesehen, so dass im montierten Zustand die Profilelemente (2) zwischen dem Klemmelement (1) und dem Konterelement (3) eingeklemmt sind und zumindest eine Seite des Profilelementes (2) an einer im wesentlichen senkrecht zu dem Klemmelement (1) und dem Konterelement (3) stehenden Wandung der Vorsprünge (11) anliegt,
e) wobei die Einrichtungen (21, 22; 31, 32) im wesentlichen mittig zwischen zwei Profilelementen (2), vorzugsweise auf einer Mittelachse der Basisplatte (30) oder der Klemmplatte (20), angeordnet und hindurchgeführt sind, **dadurch gekennzeichnet, dass** der Vorsprung (11) dergestalt ausgestaltet ist, dass im montierten Zustand zwischen dem Profilelement (2) und der Klemmplatte (20) oder dem Konterelement (3) ein Freiraum zur Aufnahme von Anbauteilen (40, 41, 42) ausgebildet ist.

2. System nach Anspruch 1, **dadurch gekennzeichnet, dass** das Klemmelement (1) einstückig ausgebildet ist.

3. System nach Anspruch 1, **dadurch gekennzeichnet, dass** das die Klemmplatte (20) und der Vorsprung (11) separate Bauteile sind, die miteinander verbunden oder aneinander befestigt sind.

4. System nach einem der voranstehenden Ansprüche, **dadurch gekennzeichnet, dass** Einrichtungen (21, 22; 31, 32) zum Verspannen als Zuganker, Gewinde, Klemmen, Keildurchführungen, Haken, Mutternaufnahmen, Ausnehmungen oder Hinterschneidungen ausgebildet sind.

5. System nach einem der voranstehenden Ansprüche, **dadurch gekennzeichnet, dass** an der Klemmplatte (20) profilseitig Kabeldurchführungen (27), Beschichtungen (29), Profilausnehmungen oder Schonelemente (26) angeordnet sind.

6. System nach einem der voranstehenden Ansprüche, **dadurch gekennzeichnet, dass** an der Klemmplatte (20) Aufnahmen (24) für Verspannungs- oder Versteifungselemente (25), insbesondere quer zur Ausrichtung der Profilelemente (2), Bohrungen (28), Gewinde, Bolzen (23), Stifte, Ausfräsungen oder Hinterschneidungen angeordnet sind.

7. System nach einem der voranstehenden Ansprüche, **dadurch gekennzeichnet, dass** an der Klemmplatte (20) zumindest eine Schneide (12) an oder zwischen den Vorsprüngen (11) ausgebildet ist, die in das Profilelement (2) einschneidet.

8. System nach einem der voranstehenden Ansprüche, **dadurch gekennzeichnet, dass** die Klemmplatte (20) in Bezug auf den Vorsprung (11) geneigt oder gebogen ausgebildet ist.

9. System nach Anspruch 8, **dadurch gekennzeichnet, dass** die Klemmplatte (20) federnd in Richtung auf die Profilelemente (2) ausgebildet ist.

10. System nach einem der voranstehenden Ansprüche, **dadurch gekennzeichnet, dass** zwei Vorsprünge (11) vorgesehen sind, die beidseitig an dem Profilelement (2) anliegen.

11. System nach einem der voranstehenden Ansprüche, **dadurch gekennzeichnet, dass** an den Vorsprüngen (11) Einrichtungen (13) zum Verspannen mit dem Konterelement (3) vorgesehen sind.

12. System nach einem der voranstehenden Ansprüche, **dadurch gekennzeichnet, dass** das Konterelement (3) Bohrungen (35) oder Ausnehmungen zur Befestigung an einer Wandung aufweist.

13. System nach einem der voranstehenden Ansprüche, **dadurch gekennzeichnet, dass** an dem Klemmelement (1) oder dem Konterelement (3) Riffelungen (36) oder Retentionseinrichtungen (37) für Profilelemente (2) ausgebildet sind.

14. System nach einem der voranstehenden Ansprüche, **dadurch gekennzeichnet, dass** das Klemmelement (1) oder das Konterelement (3) zur Aufnahme von Profilelementen (2) in Gestalt von separaten Rohren, Stäben oder Leisten oder als U-, I-, H-, oder M-Profilen ausgebildet sind.

15. System nach einem der voranstehenden Ansprüche, **dadurch gekennzeichnet, dass** das Klemmelement (1) und das Konterelement (3) in Verspannrichtung axial hintereinander aneinanderreihbar ausgebildet sind.

16. Klemmelement (1) zum Verbinden von Profilelementen (2) miteinander, an feststehenden Objekten oder mit Anbauteilen (40, 41, 42), bestehend aus einer Klemmplatte (20) und zumindest einem Vorsprung (11) senkrecht zu der Klemmplatte (20) als Anschlag für die Profilelemente (2), wobei der Vorsprung (11) dergestalt ausgebildet ist, dass zumindest eine Seite des Profilelementes (2) an einer senkrecht zu der Klemmplatte (20) stehenden Wandung des Vorsprunges (11) anlegbar ist und der Vorsprung (11) eine Verlagerung der Profilelemente (2) in Richtung senkrecht zu dessen Längserstreckung und parallel zu der Klemmplatte (20) formschlüssig verhindert, wobei an dem Klemmelement Einrichtungen zum Verspannen mit den Profilelementen vorgesehen sind und die Einrichtungen auf einer Mittelachse der Klemmplatte angeordnet sind, **dadurch gekennzeichnet, dass** der Vorsprung (11) im montierten Zustand einen Freiraum zwischen den Profilelementen (2) und der Klemmplatte (20) bildet.

17. Klemmelement nach Anspruch 16, **dadurch gekennzeichnet, dass** an den Vorsprüngen (11) Aufnahmen für Verspannungs- oder Versteifungselemente, insbesondere quer zur Ausrichtung der Profilelemente (2), Bohrungen (220), Gewinde (210), Bolzen, Stifte, Ausfräsungen, Befestigungseinrichtungen oder Hinterschneidungen angeordnet sind.

18. Klemmelement nach einem der Ansprüche 16 oder 17, **dadurch gekennzeichnet, dass** das Klemmelement (1) mehrteilig aus Bauteilen (20, 20', 20") ausgebildet ist und die Bauteile (20, 20', 20") gegeneinander verschiebbar oder verdrehbar ausgebildet sind.

19. Klemmelement nach einem der Ansprüche 15 bis 18, **dadurch gekennzeichnet, dass** die Vorsprünge (11) mehrteilig, insbesondere mehrschichtig ausgebildet sind.

20. Klemmelement nach Anspruch 19, **dadurch gekennzeichnet, dass** die Schichten (20, 20', 20") axial hintereinander in Verspannungsrichtung angeordnet sind.

21. Klemmelement nach Anspruch 19 oder 20, **dadurch gekennzeichnet, dass** zumindest eine der Schichten (20, 20', 20") eine elektrisch isolierende Schicht ist oder Rastungen, Ausnehmungen, Markierungen oder Befestigungseinrichtungen aufweist.

22. Klemmelement nach einem der Ansprüche 15 bis 21, **dadurch gekennzeichnet, dass** die Vorsprünge (11) und die Einrichtungen (13, 21, 22; 31, 32) zum Verspannen dergestalt angeordnet sind, dass die Profilelemente (2) zwischen zwei Vorsprüngen (11), zwischen einem Vorsprung (11) und einer Einrichtung oder zwischen zwei Einrichtungen (13, 21, 22; 31, 32) zum Verspannen anordbar sind.

23. Klemmelement nach einem der Ansprüche 15 bis 22, **dadurch gekennzeichnet, dass** Vorsprünge (11) auf einander gegenüberliegenden Seiten der Klemmplatte (20) ausgebildet sind.

24. Konterelement zum Verbinden von Profilelementen (2) miteinander, an feststehenden Objekten oder mit Anbauteilen (40, 41, 42), bestehend aus einer Basisplatte (30) und zumindest einem Vorsprung (11) senkrecht zu der Basisplatte (30) als Anschlag für die Profilelemente (2), wobei der Vorsprung (11) dergestalt ausgebildet ist, dass zumindest eine Seite des Profilelementes (2) an einer im wesentlichen senkrecht zu der Basisplatte (30) stehenden Wandung des Vorsprunges (11) anlegbar ist und der Vorsprung (11) eine Verlagerung der Profilelemente (2) in Richtung senkrecht zu dessen Längserstreckung und parallel zu der Basisplatte (30) formschlüssig verhindert, wobei an dem Konterelement Einrichtungen zum Verspannen mit den Profilelementen vorgesehen sind und die Einrichtungen auf einer Mittelachse der Basisplatte angeordnet sind, **dadurch gekennzeichnet, dass** der Vorsprung (11) im montierten Zustand einen Freiraum zwischen den Profilelementen (2) und der Basisplatte (20) bildet.

25. Konterelement nach Anspruch 24, **dadurch gekennzeichnet, dass** die Vorsprünge (11) auf einander gegenüberliegenden Seiten der Basisplatte (30) angeordnet sind.

26. Konterelement nach Anspruch 24 oder 25, **dadurch gekennzeichnet, dass** das Konterelement (3) und/oder die Vorsprünge (11) mehrteilig aus Bauteilen, insbesondere mehrschichtig ausgebildet ist.

27. Konterelement nach Anspruch 26, **dadurch gekennzeichnet, dass** die Bauteile gegeneinander verschiebbar oder verdrehbar ausgebildet sind.

28. Konterelement nach Anspruch 26 oder 27 **dadurch gekennzeichnet, dass** die Schichten axial hintereinander in Verspannungsrichtung angeordnet sind.

29. Konterelement nach einem der Ansprüche 26 bis 28 **dadurch gekennzeichnet, dass** zumindest eine der Schichten eine elektrisch isolierende Schicht ist oder Rastungen, Ausnehmungen, Markierungen oder Befestigungseinrichtungen aufweist.

30. Konterelement nach einem der Ansprüche 24 bis 29, **dadurch gekennzeichnet, dass** das Konterelement (3) in einer Wandung, einer Decke, einem Boden oder einem anderen, feststehenden oder flächigen Objekt einbaubar oder integrierbar ist.

31. Konterelement nach einem der Ansprüche 24 bis 30, **dadurch gekennzeichnet, dass** die Vorsprünge (11) und die Einrichtungen (13; 21, 22; 31, 32) zum Verspannen dergestalt angeordnet sind, dass die Profilelemente (2) zwischen zwei Vorsprüngen, zwischen einem Vorsprung und einer Einrichtung oder zwischen zwei Einrichtungen anordbar sind.

32. Konterelement nach einem der Ansprüche 24 bis 31, **dadurch gekennzeichnet, dass** an der Basisplatte oder den Vorsprüngen (11) Aufnahmen für Verspannungs- oder Versteifungselemente, insbesondere quer zur Ausrichtung der Profilelemente (2), Bohrungen (280), Gewinde (320), Bolzen, Stifte, Ausfräsungen, Befestigungseinrichtungen oder Hinterschneidungen angeordnet sind.

## Claims

1. System for connecting profile elements (2), to add-on parts (40, 41, 42),
a) having a separate clamping element (1) with a clamping plate (20) and at least one protrusion (11), designed essentially perpendicularly to the clamping plate (20), as a stop for the profile elements (2), the protrusion (11) preventing, in a form-fitting manner, displacement of the profile elements (2) in the direction perpendicular to the longitudinal extent of the latter and parallel to the clamping plate (20),
b) having a separate locking element (3) with a base plate (30) and at least one protrusion (11), designed essentially perpendicularly to the base plate (30), as a stop for the profile elements (2), the protrusion (11) preventing, in a form-fitting manner, displacement of the profile elements (2) in the direction perpendicular to the longitudinal extent of the latter and parallel to the base plate (30),
c) it being the case that, in the assembled state, the locking element (3) butts against that side of the profile elements (2) which is located opposite the clamping element (1), such that the protrusions (11) of the locking element (3) and of the clamping element (1) are directed toward one another,
d) provided on the clamping element (1) and on the locking element (3) are devices (21, 22; 31, 32) for bracing the same in the direction of one another, with the result that, in the assembled state, the profile elements (2) are clamped in between the clamping element (1) and the locking element (3) and at least one side of the profile element (2) butts against a wall of the protrusions (11) which is located essentially perpendicularly to the clamping element (1) and the locking element (3),
e) it being the case that the devices (21, 22; 31, 32) are arranged, and guided through, essentially centrally between two profile elements (2), preferably along a center axis of the base plate (30) or of the clamping plate (20), **characterized in that** the protrusion (11) is configured such that, in the assembled state, a clearance for accommodating add-on parts (40, 41, 42) is formed between the profile element (2) and the clamping plate (20) or the locking element (3).

2. System according to Claim 1, **characterized in that** the clamping element (1) is designed in one piece.

3. System according to Claim 1, **characterized in that** the clamping plate (20) and the protrusion (11) are separate components which are connected to one another or fastened on one another.

4. System according to one of the preceding claims, **characterized in that** devices (21, 22; 31, 32) for bracing purposes are designed as tie rods, threads, clips, wedge leadthroughs, hooks, nut mounts, recesses or undercuts.

5. System according to one of the preceding claims, **characterized in that** cable bushings (27), coatings (29), profile recesses or protective elements (26) are arranged on the clamping plate (20), on the profile side.

6. System according to one of the preceding claims, **characterized in that** arranged on the clamping plate (20) are mounts (24) for bracing or stiffening elements (25), in particular in the direction transverse to the orientation of the profile elements (2), bores (28), threads, bolts (23), pins, milled reliefs or undercuts.

7. System according to one of the preceding claims, **characterized in that**, on the clamping plate (20), at least one cutting edge (12) is formed on or between the protrusions (11), and cuts into the profile element (2).

8. System according to one of the preceding claims, **characterized in that** the clamping plate (20) is of inclined or curved design in relation to the protrusion (11).

9. System according to Claim 8, **characterized in that** the clamping plate (20) is designed to be resilient in the direction of the profile elements (2).

10. System according to one of the preceding claims, **characterized in that** two protrusions (11) are provided, and these butt against the profile element (2) on both sides.

11. System according to one of the preceding claims, **characterized in that** devices (13) for bracing with the locking element (3) are provided on the protrusions (11).

12. System according to one of the preceding claims, **characterized in that** the locking element (3) has bores (35) or recesses for fastening on a wall.

13. System according to one of the preceding claims, **characterized in that** ribbing (36) or retention devices (37) for profile elements (2) is/are formed on the clamping element (1) or the locking element (3).

14. System according to one of the preceding claims, **characterized in that** the clamping element (1) or the locking element (3), for accommodating profile elements (2), are designed in the form of separate tubes, bars or rails or as a U-shaped, I-shaped, H-shaped or M-shaped profile.

15. System according to one of the preceding claims, **characterized in that** the clamping element (1) and the locking element (3) are designed such that they can be lined up axially one behind the other in the bracing direction.

16. Clamping element (1) for connecting profile elements (2) to one another, to fixed objects or to add-on parts (40, 41, 42), comprising a clamping plate (20) and at least one protrusion (11) perpendicular to the clamping plate (20) as a stop for profile elements (2), the protrusion (11) being designed such that at least one side of the profile element (2) can be positioned against a wall of the protrusion (11) which is located perpendicularly to the clamping plate (20), and the protrusion (11) prevents, in a form-fitting manner, displacement of the profile elements (2) in the direction perpendicular to the longitudinal extent of the latter and parallel to the clamping plate (20), it being the case that devices for bracing with the profile elements are provided on the clamping element, and the devices are arranged along a center axis of the clamping plate, **characterized in that**, in the assembled state, the protrusion (11) forms a clearance between the profile elements (2) and the clamping plate.

17. Clamping element according to Claim 16, **characterized in that** arranged on the protrusions (11) are mounts for bracing or stiffening elements, in particular in the direction transverse to the orientation of the profile elements (2), bores (220), threads (210), bolts, pins, milled reliefs, fastening devices or undercuts.

18. Clamping element according to either of Claims 16 and 17, **characterized in that** the clamping element (1) is designed in a number of parts from components (20, 20', 20''), and the components (20, 20', 20") are designed such that they can be displaced or rotated in relation to one another.

19. Clamping element according to either of Claims 15 to 18, **characterized in that** the protrusions (11) are designed in a number of parts, in particular a number of layers.

20. Clamping element according to Claim 19, **characterized in that** the layers (20, 20', 20'') are arranged axially one behind the other in the bracing direction.

21. Clamping element according to Claim 19 or 20, **characterized in that** at least one of the layers (20, 20', 20") is an electrically insulating layer or has latching means, recesses, markings or fastening devices.

22. Clamping element according to one of Claims 15 to 21, **characterized in that** the protrusions (11) and the devices (13, 21, 22; 31, 32) for bracing purposes are arranged such that the profile elements (2) can be arranged between two protrusions (11), between one protrusion (11) and one device or between two devices (13, 21, 22; 31, 32) for bracing purposes.

23. Clamping element according to one of Claims 15 to 22, **characterized in that** protrusions (11) are formed on opposite sides of the clamping plate (20).

24. Locking element for connecting profile elements (2) to one another, to fixed objects or to add-on parts (40, 41, 42), comprising a base plate (30) and at least one protrusion (11) perpendicular to the base plate (30) as a stop for the profile elements (2), the protrusion (11) being designed such that at least one side of the profile element (2) can be positioned against a wall of the protrusion (11) which is located essentially perpendicularly to the base plate (30), and the protrusion (11) prevents, in a form-fitting manner, displacement of the profile elements (2) in the direction perpendicular to the longitudinal extent of the latter and parallel to the base plate (30), it being the case that devices for bracing with the profile elements are provided on the locking element and the devices are arranged along a center axis of the base plate, **characterized in that**, in the assembled state, the protrusion (11) forms a clearance between the profile elements (2) and the base plate (30).

25. Locking element according to Claim 24, **characterized in that** the protrusions (11) are arranged on opposite sides of the base plate (30).

26. Locking element according to Claim 24 or 25, **characterized in that** the locking element (3) and/or the protrusions (11) are/is designed in a number of parts from components, in particular in a number of layers.

27. Locking element according to Claim 26, **characterized in that** the components are designed such that they can be displaced or rotated in relation to one another.

28. Locking element according to Claim 26 or 27, **characterized in that** the layers are arranged axially one behind the other in the bracing direction.

29. Locking element according to one of Claims 26 to 28, **characterized in that** at least one of the layers is an electrically insulating layer or has latching means, recesses, markings or fastening devices.

30. Locking element according to one of Claims 24 to 29, **characterized in that** the locking element (3) can be installed or integrated in a wall, a ceiling, a floor or some other fixed or planar object.

31. Locking element according to one of Claims 24 to 30, **characterized in that** the protrusions (11) and the devices (13; 21, 22; 31, 32) for bracing purposes are arranged such that the profile elements (2) can be arranged between two protrusions, between one protrusion and one device or between two devices.

32. Locking element according to one of Claims 24 to 31, **characterized in that** arranged on the base plate or the protrusions (11) are mounts for bracing or stiffening elements, in particular in the direction transverse to the orientation of the profile elements (2), bores (280), threads (320), bolts, pins, milled reliefs, fastening devices or undercuts.

## Revendications

1. Système pour assembler des éléments profilés (2) avec des pièces d'ajout (40, 41, 42),
a) comprenant un élément de serrage séparé (1) comportant une plaque de serrage (20) et au moins une protubérance (11) réalisée de façon sensiblement perpendiculaire à la plaque de serrage (20) en tant que butée (11) empêchant un déplacement de l'élément profilé (2) dans une direction perpendiculaire à son extension longitudinale et parallèle à la plaque de serrage (20), par conjugaison de forme,
b) comprenant un contre-élément (3) séparé comportant une plaque de base (30) et au moins une protubérance (11) réalisée de façon sensiblement perpendiculaire à la plaque de base (30) en tant que butée pour l'élément profilé (2), la butée (11) empêchant un déplacement de l'élément profilé (2) dans une direction perpendiculaire à son extension longitudinale et parallèle à la plaque de base (30), par conjugaison de forme,
c) dans lequel, à l'état de monté, le contre-élément (3) s'appuie sur la face de l'élément profilé (2) opposée à l'élément de serrage (1), de telle sorte que les protubérances (11) du contre-élément (3) et de l'élément de serrage (1) sont dirigées l'une vers l'autre,
d) l'élément de serrage (1) et le contre-élément (3) sont pourvus de moyens (21, 22 ; 31, 32) pour assurer un serrage dans des directions opposées l'une par rapport à l'autre, de telle sorte qu'à l'état monté, l'élément profilé (2) soit serré entre l'élément de serrage (1) et le contre-élément (3) et au moins une face de l'élément profilé (2) s'appuie sur une face des protubérances (11) qui est sensiblement perpendiculaire à l'élément de serrage (1) et au contre-élément (3),
e) dans lequel, les moyens (21, 22 ; 31, 32) sont disposés et engagés sensiblement au milieu entre deux éléments profilés (2), de préférence sur un axe du milieu de la plaque de base (30) ou de la plaque de serrage (30) ou de la plaque de serrage (20), **caractérisé en ce que** la protubérance (11) est conçue de telle sorte qu'à l'état monté, un espace libre pour recevoir des pièces d'ajout (40, 41, 42) est créé entre l'élément profilé (2) et la plaque de serrage (20) ou le contre-élément (3).

2. Système selon la revendication 1, **caractérisé en ce que** l'élément de serrage (1) est réalisé d'une seule pièce.

3. Système selon la revendication 1, **caractérisé en ce que** la plaque de serrage (20) et la protubérance (11) sont des pièces séparées qui sont reliées l'une à l'autre ou fixées l'une contre l'autre.

4. Système selon l'une des revendications précédentes, **caractérisé en ce que** les moyens de serrage sont réalisés sous forme d'ancres de traction, filetages, pinces de serrage, passages de coin, crochets, supports d'écrou, évidements ou contre-dépouilles.

5. Système selon l'une des revendications précédentes, **caractérisé en ce que** des passages de câbles (27), des revêtements (29), des évidements profilés ou des éléments de protection (26) sont agencés sur la plaque de serrage (20) du côté du profilé.

6. Système selon l'une des revendications précédentes, **caractérisé en ce que** des logements (24) pour des éléments de serrage ou de renforcement (25) sont agencés sur la plaque de serrage (20), notamment transversalement à la direction de l'élément profilé (2), ainsi que des perçages (28), des taraudages, des rivets (23), des broches, des évidements fraisés ou des contre-dépouilles.

7. Système selon l'une des revendications précédentes, **caractérisé en ce qu'**au moins un tranchant (12) est réalisé sur la plaque de serrage (20) sur ou entre les protubérance (11) qui s'enfonce dans l'élément profilé (2).

8. Système selon l'une des revendications précédentes, **caractérisé en ce que** la plaque de serrage (20) est inclinée ou courbée par rapport à la protubérance (11).

9. Système selon la revendication 8, **caractérisé en ce que** la plaque de serrage (20) est réalisée de façon élastique dans la direction de l'élément profilé (2).

10. Système selon l'une des revendications précédentes, **caractérisé en ce que** deux protubérances (11) sont prévues, celles-ci s'appuyant des deux côtés sur l'élément profilé (2).

11. Système selon l'une des revendications précédentes, **caractérisé en ce que** des moyens (13) de serrage avec le contre-élément (3) sont prévus sur les protubérances (11).

12. Système selon l'une des revendications précédentes, **caractérisé en ce que** le contre-élément (3) présente des perçages (35) ou des évidements pour sa fixation à une paroi.

13. Système selon l'une des revendications précédentes, **caractérisé en ce que** des stries (36) ou des moyens de rétention (37) pour l'élément profilé (2) sont agencés sur l'élément de serrage (1) ou le contre-élément (3).

14. Système selon l'une des revendications précédentes, **caractérisé en ce que** l'élément de serrage (1) ou le contre-élément (3) sont conçus pour la réception d'éléments profilés (2) sous forme de tubes séparés, de barreaux ou de lisses ou en tant que profilés en U, I, H ou M.

15. Système selon l'une des revendications précédentes, **caractérisé en ce que** l'élément de serrage (1) et le contre-élément (3) sont disposés axialement dans la direction de serrage l'un derrière l'autre de façon à pouvoir tourner.

16. Elément de serrage (1) pour assembler des éléments profilés (2) à des objets disposés de façon fixe ou à des pièces d'ajout (40, 41, 42) constitué par une plaque de serrage (20) et au moins une protubérance (11) perpendiculaire à la plaque de serrage (20) en tant que butée pour l'élément profilé (2), la protubérance (11) étant conçue de telle sorte qu'au moins une face de l'élément profilé (2) puisse s'appuyer sur une surface de la protubérance (11) disposée perpendiculairement à la plaque de serrage (20) et la protubérance (11) empêche par conjugaison de forme, un déplacement de l'élément profilé (2) dans une direction perpendiculaire à son extension longitudinale et parallèle à la plaque de serrage (20), dans lequel des moyens de serrage avec les éléments de profilés sont prévus sur l'élément de serrage, ces moyens étant agencés sur un axe de milieu de la plaque de serrage, **caractérisé en ce qu'**à l'état monté, la protubérance (11) crée un espace libre entre les éléments profilés (2) et la plaque de serrage (20).

17. Elément de serrage selon la revendication 16, **caractérisé en ce que** des logements pour des éléments de serrage ou de renforcement sont agencés sur les protubérances (11), notamment transversalement à la direction de l'élément profilé (2) ainsi que des perçages (220), des taraudages (210), des rivets, des broches, des évidements fraisés, des moyens de fixation ou des contre-dépouilles.

18. Elément de serrage selon l'une des revendications 16 ou 17, **caractérisé en ce que** l'élément de serrage est réalisé en plusieurs pièces (20, 20', 20") et les pièces (20, 20', 20") sont conçues pour pouvoir se déplacer ou tourner l'une par rapport à l'autre.

19. Elément de serrage selon l'une des revendications 15 à 18, **caractérisé en ce que** les protubérances (11) sont réalisées en plusieurs parties, en particulier en plusieurs couches.

20. Elément de serrage selon la revendication 19, **caractérisé en ce que** les couches (20, 20', 20") sont disposées axialement l'une derrière l'autre dans la direction du serrage.

21. Elément de serrage selon la revendication 19 ou 20, **caractérisé en ce qu'**au moins l'une des couches (20, 20', 20") est une couche électriquement isolante ou présente des crans, des évidements, des marques ou des dispositifs de fixation.

22. Elément de serrage selon l'une des revendications 15 à 21, **caractérisé en ce que** les protubérances (11) et les dispositifs (13, 21, 22 ; 31, 32) sont agencés pour le serrage de telle sorte que les éléments profilés (2) peuvent être disposés entre deux protubérances (11), entre une protubérance (11) et un dispositif ou entre deux dispositifs (13, 21, 22 ; 31, 32) pour le serrage.

23. Elément de serrage selon l'une des revendications 15 à 22, **caractérisé en ce que** les protubérances (11) sont réalisées sur des côtés opposés l'un à l'autre de la plaque de serrage (20).

24. Contre-élément pour assembler des éléments profilés (2) à des objets disposés de façon fixe ou à des pièces d'ajout (40, 41, 42) constitué par une plaque de base (30) et au moins une protubérance (11) perpendiculaire à la plaque de base (30) en tant que butée pour l'élément profilé (2), la protubérance (11) étant conçue de telle sorte qu'au moins une face de l'élément profilé (2) puisse s'appuyer sur une surface de la protubérance (11) disposée perpendiculairement à la plaque de base (30) et la protubérance (11) empêche par conjugaison de forme, un déplacement de l'élément profilé (2) dans une direction perpendiculaire à son extension longitudinale et parallèle à la plaque de base (30), dans lequel des moyens de serrage avec les éléments de profilés sont prévus sur le contre-élément, ces moyens étant agencés sur un axe de milieu de la plaque de base, **caractérisé en ce qu'**à l'état monté, la protubérance (11) crée un espace libre entre les éléments profilés (2) et la plaque de base (30).

25. Contre-élément selon la revendication 24, **caractérisé en ce que** les protubérances (11) sont réalisées sur des côtés opposés l'un à l'autre de la plaque de base (30).

26. Contre-élément selon l'une des revendications 24 ou 25, **caractérisé en ce que** le contre-élément (3) et/ou les protubérances (11) sont réalisées en plusieurs parties, en particulier en plusieurs couches.

27. Contre-élément selon la revendication 26, **caractérisé en ce que** les parties peuvent se déplacer ou tourner l'une par rapport à l'autre.

28. Contre-élément selon la revendication 26 ou 27, **caractérisé en ce que** les couches sont disposées axialement l'une derrière l'autre dans la direction du serrage.

29. Contre-élément selon l'une des revendications 26 à 28, **caractérisé en ce qu'**au moins l'une des couches est une couche électriquement isolante ou présente des crans, des évidements, des marques ou des dispositifs de fixation.

30. Contre-élément selon l'une des revendications 24 à 29, **caractérisé en ce que** le contre-élément (3) peut être construit ou intégré dans une paroi, un plafond, un plancher ou un autre objet fixe ou plat.

31. Contre-élément selon l'une des revendications 24 à 30 **caractérisé en ce que** les protubérances (11) et les dispositifs (13, 21, 22 ; 31, 32) sont agencés pour le serrage de telle sorte que les éléments profilés (2) peuvent être disposés entre deux protubérances (11), entre une protubérance (11) et un dispositif ou entre deux dispositifs pour le serrage.

32. Contre-élément selon l'une des revendications 24 à 31, sur la plaque de base ou les protubérances sont pratiqués des logements pour des éléments de serrage ou de renforcement notamment transversalement à la direction de l'élément profilé (2) ainsi que des perçages (280), des taraudages (320), des rivets, des broches, des évidements fraisés, des moyens de fixation ou des contre-dépouilles.
